# EUROPEAN PATENT APPLICATION

(11) **EP 4 632 553 A1**
(43) Date of publication of application: **15.10.2025**
(21) Application number: 24839851.3
(22) Date of filing: 27.03.2024
(51) Int. Cl.: G06F 3/14, G06F 3/0484, G06F 9/451, G06F 1/16, G06F 3/048

(54) **ELECTRONIC DEVICE FOR EXECUTING AT LEAST ONE APPLICATION ON BASIS OF STATE OF FLEXIBLE DISPLAY, AND METHOD THEREFOR**

(30) Priority: 07.07.2023 KR 20230088711; 17.08.2023 KR 20230107747; 13.09.2023 KR 20230122048
(71) Applicant: Samsung Electronics Co., Ltd., Suwon-si, Gyeonggi-do 16677 (KR)
(72) Inventor: CHANG, Seho, Suwon-si Gyeonggi-do 16677 (KR); BAE, Hyerim, Suwon-si Gyeonggi-do 16677 (KR); YOON, Byounguk, Suwon-si Gyeonggi-do 16677 (KR)
(74) Representative: Nederlandsch Octrooibureau
(86) International application number: PCT/KR2024/003891
(87) International publication number: WO 2025/014030

(57) **Abstract**

At least one processor of a multi-foldable electronic device, according to an embodiment, is configured to: individually and/or collectively display an execution screen of a first application on a first area, a second area, and a third area of a flexible display in an unfolded state; identify one of a third housing and a second housing, which are folded with respect to a first housing; display the execution screen of the first application on the second area and an execution screen of a second application on the first area and the third area on the basis of identifying that the second housing is folded with respect to the first housing; and control the electronic device to display the execution screen of the first application on the first area and the second area and the execution screen of the second application on the third area on the basis of identifying that the third housing is folded with respect to the first housing.

## Description

### [Technical Field]

The present disclosure relates to an electronic device for executing one or more applications based on a state of a flexible display and a method thereof.

### [Background Art]

The shape and/or size of electronic devices are diversifying. In order to enhance mobility, an electronic device having a reduced size and/or a reduced volume are being designed. The electronic device may include a display for visualizing information. As the number of functions supported by the electronic device increases, a size of the display may increase to visualize more information to a user, and/or to support execution of the functions. For example, the electronic device may be designed so that the size and/or volume of the electronic device is reduced, while maintaining or increasing the size of the display.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

According to an example embodiment, a multi-foldable electronic device may include: a first housing, a second housing, and a third housing. The first housing may be rotatably coupled to a side of the second housing, and the third housing may be rotatably coupled to another side of the first housing. The multi-foldable electronic device may include: a flexible display disposed on a first surface of the first housing, a second surface of the second housing, and a third surface of the third housing, one or more sensors configured to identify a first angle between the first housing and the second housing and a second angle between the first housing and the third housing, memory storing instructions, and at least one processor, comprising processing circuitry, individually and/or collectively, configured to execute the instructions by accessing the memory. At least one processor, individually and/or collectively, may be configured to: control the electronic device to display a first screen of a first application on the flexible display while executing a first application in the unfolded state of the first housing, the second housing, and the third housing. At least one processor, individually and/or collectively, may be configured to detect any of the first angle or the second angle based on the one or more sensors while displaying the first screen. At least one processor, individually and/or collectively, may be configured to display a second screen for executing the first application and a third screen for executing a second application related to the second screen on the flexible display, based on the detected first angle or the second angle.

According to an example embodiment, a method of operating a multi-foldable electronic device may include: displaying, while a first application is executed in an unfolded state of a first housing, a second housing, and a third housing of the multi-foldable electronic device, a first screen of the first application on a flexible display disposed on a first surface of the first housing, the second housing, and the third housing. The method may comprise identifying a first angle between the first housing and the second housing assembly or a second angle between the first housing assembly and the third housing assembly, based on one or more sensors of the multi-foldable electronic device, while displaying the first screen. The method may comprise displaying a second screen executing the first application and a third screen executing a second application related to the second screen on the flexible display, based on identifying the identified first angle or the second angle.

According to an example embodiment, a multi-foldable electronic device may include: a multi-foldable housing including a first housing, a second housing rotatably coupled to a side of the first housing, and a third housing rotatably coupled to another side of the first housing, a flexible display disposed on a front side of the first housing, the second housing, and the third housing, at least one sensor configured to identify a first angle between the first housing and the second housing and a second angle between the first housing and the third housing, memory storing instructions, and at least one processor, comprising processing circuitry. At least one processor, individually and/or collectively, may be configured to control the electronic device to: based on directions of front sides of the first housing, the second housing, and the third housing in which the flexible display is located being parallel to each other, display a first screen based on execution of at least one application on an entire active area of the flexible display while executing the at least one application. At least one processor , individually and/or collectively, may be configured to, based on identifying a rotation of the second housing while displaying the first screen, display the first screen based on the execution of the at least one application in a first region of the flexible display corresponding to the front side of the second housing, and display a second screen related to the first screen in a second region and a third region of the flexible display corresponding to front sides of the first housing and the third housing. At least one processor, individually and/or collectively, may be configured to, while displaying the first screen, display the first screen based on execution of the at least one application on a third region of the flexible display corresponding to the front side of the third housing based on identifying the rotation of the third housing, and display a second screen related to the first screen on a first region and a second region of the flexible display corresponding to front sides of the first housing and the second housing.

According to an example embodiment, a method of operating a multi-foldable electronic device may include: based on directions of front sides of a first housing, a second housing, and a third housing in which a flexible display of the multi-foldable electronic devices is positioned being parallel to each other, displaying a first screen on the entire active area of the flexible display. The method may comprise, based on identifying a rotation of the second housing while displaying the first screen, displaying the first screen based on the execution of the at least one application on a first region of the flexible display corresponding to the front side of the second housing, and displaying a second screen related to the first screen on a second region and a third region of the flexible display corresponding to front sides of the first housing and the third housing. The method may comprise based on identifying a rotation of the third housing while displaying the first screen, displaying the first screen based on execution of the at least one application on a third region of the flexible display corresponding to the front side of the third housing, and displaying a second screen related to the first screen on a first region and a second region of the flexible display corresponding to front sides of the first housing and the second housing.

According to an example embodiment, a multi-foldable electronic device may comprise: a first housing, a second housing rotatably coupled to a side of the first housing, a third housing rotatably coupled to another side of the first housing, a flexible display including a first region corresponding to the first housing, a second region corresponding to the second housing and a third region corresponding to the third housing, a first sensor configured to provide information related to a first angle between the first housing and the second housing, a second sensor configured to provide information related to a second angle between the first housing and the third housing, at least one processor, comprising processing circuitry, and memory for storing instructions. The instructions, when executed by at least one processor, individually and/or collectively, may cause the electronic device to: while executing a first application in an unfolding state of the first housing, the second housing and the third housing, display an execution screen of the first application on the first region, the second region and the third region of the flexible display. The instructions, when executed by at least one processor, individually and/or collectively, may cause the electronic device to, while displaying the execution screen of the first application on the first region, the second region and the third region of the flexible display, identify any of the second housing and the third housing being folded with respect to the first housing based on information from the first sensor and the second sensor. The instructions, when executed by at least one processor, individually and/or collectively, may cause the electronic device to display an execution screen of the second application on the second region of the flexible display and an execution screen of a second application on the first region and the third region of the flexible display, based on identifying that the second housing is folded with respect to the first housing. The instructions, when executed by at least one processor, individually and/or collectively, may cause the electronic device to display an execution screen of the first application on the first region and the second region of the flexible display and an execution screen of a second application on the third region of the flexible display, based on identifying that the third housing is folded with respect to the first housing.

According to an example embodiment, a method of operating a multi-foldable electronic device may comprise displaying, while executing a first application in an unfolding state of a first housing, a second housing and a third housing of the multi-foldable electronic device, an execution screen of the first application on a first region, a second region and a third region. The method may comprise identifying, while displaying the execution screen of the first application on the first region, the second region and the third region, based on information from a first sensor and a second sensor, any of the second housing and the third housing folded with respect to the first housing. The method may comprise displaying, based on identifying that the second housing is folded with respect to the first housing, an execution screen of the first application on the second region of the flexible display and displaying an execution screen of the second application on the first region and the third region of the flexible display. The method may comprise displaying, based on identifying that the third housing is folded with respect to the first housing, an execution screen of the first application on the first region and the second region of the flexible display, and displaying an execution screen of the second application on the third region of the flexible display.

According to an example embodiment, a multi-foldable electronic device may comprise: a first housing, a second housing rotatably coupled to a side of the first housing, a third housing rotatably coupled to another side of the first housing, a flexible display including a first region corresponding to the first housing, a second region corresponding to the second housing and a third region corresponding to the third housing, a first sensor configured to provide information related to a first angle between the first housing and the second housing, a second sensor configured to provide information related to a second angle between the first housing and the third housing, at least one processor, comprising processing circuitry, and memory storing instructions. The instructions, when executed by at least one processor, individually and/or collectively, may cause the electronic device to: while executing a first application in an unfolding state of the first housing, the second housing and the third housing, display an execution screen of the first application on the first region, the second region and the third region of the flexible display. The instructions, when executed by at least one processor, individually and/or collectively, may cause the electronic device to, while displaying the execution screen of the first application on the first region, the second region and the third region of the flexible display, identify any of the second housing and the third housing being folded with respect to the first housing based on information from the first sensor and the second sensor. The instructions, when executed by at least one processor, individually and/or collectively, may cause the electronic device to display an execution screen of the first application on the second region and an execution screen of a second application on the first region and the third region, or display an execution screen of the first application on the first region and the third region of the flexible display and an execution screen of the second application on the second region, based on identifying that the second housing is folded with respect to the first housing. The instructions, when executed by at least one processor, individually and/or collectively, may cause the electronic device to display an execution screen of the first application on the third region and an execution screen of the second application on the first region and the second region, or display an execution screen of the first application on the first region and the third region and an execution screen of the second application on the third region, based on identifying that the third housing is folded with respect to the first housing.

### [Description of the Drawings]

The above and other aspects, features and advantages of certain embodiments of the present disclosure will be more apparent from the following detailed description, taken in conjunction with the accompanying drawings, in which:
FIG. 1 is a perspective view illustrating an example deformable electronic device according to various embodiments;
FIG. 2 is a block diagram illustrating an example configuration of an electronic device according to various embodiments;
FIGS. 3A and 3B are perspective views illustrating examples of a deformable electronic device according to various embodiments;
FIGS. 4A and 4B are signal flow diagrams illustrating example operations of an electronic device according to various embodiments;
FIGS. 5A and 5B are perspective views illustrating example states of an electronic device, according to various embodiments;
FIGS. 6A and 6B are perspective views illustrating example states of an electronic device, according to various embodiments;
FIG. 7 is a perspective view illustrating example states of an electronic device according to various embodiments;
FIG. 8 is a perspective view illustrating example states of an electronic device according to various embodiments;
FIG. 9 is a perspective view illustrating example states of an electronic device according to various embodiments;
FIG. 10 is a perspective view illustrating example states of an electronic device according to various embodiments;
FIG. 11 is a flowchart illustrating example operations of an electronic device according to various embodiments;
FIG. 12 is a flowchart illustrating example operations of an electronic device according to various embodiments; and
FIG. 13 is a block diagram illustrating an example electronic device in a network environment according to various embodiments.

### [Mode for Invention]

Hereinafter, various example embodiments of the disclosure will be described in greater detail with reference to the accompanying drawings.

The various example embodiments of the disclosure and terms used herein are not intended to limit the technology described in the disclosure to specific embodiments, and should be understood to include various modifications, equivalents, or substitutes of the various embodiments. In relation to the description of the drawings, a reference numeral may be used for a similar component. A singular expression may include a plural expression unless it is clearly meant differently in the context. In the disclosure, an expression such as "A or B", "at least one of A and/or B", "A, B or C", or "at least one of A, B and/or C", and the like may include all possible combinations of items listed together. Expressions such as "first", "second", "first" or "second", and the like may modify the corresponding components regardless of order or importance, is simply used to distinguish one component from another component, and does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the disclosure may include a unit configured with hardware, software, or firmware, or any combination thereof, and may be used interchangeably with terms such as logic, logic block, component, or circuit, and the like, for example. The module may be an integrally configured component or a minimum unit or part thereof that performs one or more functions. For example, a module may be configured with an application-specific integrated circuit (ASIC).

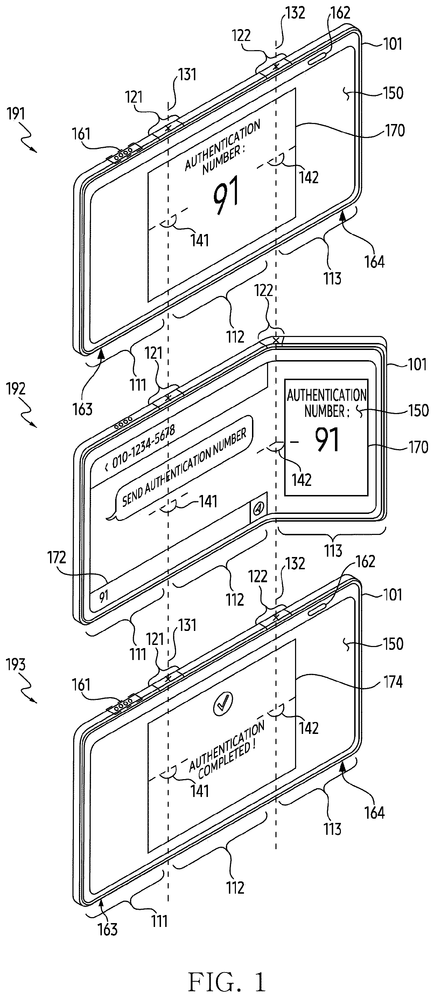

FIG. 1 is a perspective view illustrating an example deformable electronic device 101 according to various embodiments. In an embodiment, the electronic device 101 may be referred to as a terminal (or user terminal). For example, the terminal may include a personal computer (PC) such as a laptop and a desktop. For example, the terminal may include a smartphone, a smart-pad, and/or a tablet PC. For example, the terminal may include a smart accessory such as a smartwatch and/or a head-mounted device (HMD).

Referring to FIG. 1, according to an embodiment, the electronic device 101 may include a deformable housing. Based on deformability, the housing of the electronic device 101 may be divided into a plurality of parts (or portions). For example, the housing of the electronic device 101 of FIG. 1 may include a first housing part 111, a second housing part 112, a first hinge assembly 121 for rotatably coupling the first housing part 111 and the second housing part 112. By the first hinge assembly 121, a relative position, an angle, a shape, and/or a distance of the first housing part 111 and the second housing part 112, which are rigid bodies, may be changed by an external force. The housing of the electronic device 101 may include the second housing part 112, a third housing part 113, and a second hinge assembly 122 for rotatably coupling the second housing part 112 and the third housing part 113. By the second hinge assembly 122, a relative position, an angle, a shape, a posture, and/or a distance of the second housing part 112 and the third housing part 113 may be changed by an external force. Based on the first hinge assembly 121 and the second hinge assembly 122, the electronic device 101 may have a structure capable of being folded once or more. In an embodiment, a housing part, such as the first housing part 111, the second housing part 112, and the third housing part 113, may be referred to as a sub-housing, a flat housing, and/or a rigid housing. In an embodiment, a hinge assembly including the first hinge assembly 121 and the second hinge assembly 122 may be referred to as a hinge housing, a joint housing and/or a flexible housing.

Referring to FIG. 1, a first folding axis 131 may be a rotation axis of the first housing part 111 and the second housing part 112, which are connected through the first hinge assembly 121, and may be formed in the first hinge assembly 121. As the first housing part 111 and/or the second housing part 112 are rotated with respect to the first folding axis 131, a first angle 141 between the first housing part 111, the first hinge assembly 121, and the second housing part 112 may be changed. A second folding axis 132 may be a rotation axis of the second housing part 112 and the third housing part 113, which are connected through the second hinge assembly 122, and may be formed in the second hinge assembly 122. As the second housing part 112 and/or the third housing part 113 are rotated with respect to the second folding axis 132, a second angle 142 between the second housing part 112, the second hinge assembly 122, and the third housing part 113 may be changed. In terms of including a plurality of deformable folding axes, such as the first folding axis 131 and the second folding axis 132, the electronic device 101 may be referred to as a multi-foldable electronic device.

Referring to FIG. 1, according to an embodiment, the electronic device 101 may include a flexible display 150 disposed on a surface (e.g., a front surface or a front side of the electronic device 101) of the first housing part 111, the second housing part 112, and the third housing part 113. For example, the flexible display 150 may be extended from the first housing part 111 to the third housing part 113 across the second housing part 112. The flexible display 150 may be positioned to form a front side of the first housing part 111, the second housing part 112, and the third housing part 113. For example, the flexible display 150 may be disposed from the first housing part 111 to the third housing part 113 across the first hinge assembly 121, the second housing part 112, and the second hinge assembly 122. Hereinafter, the first angle 141 may correspond to an angle between a surface of the first housing part 111 and a surface of the second housing part 112 on which the flexible display 150 capable of being folded by the first folding axis 131of the first hinge assembly 121 is disposed. Hereinafter, the second angle 142 may correspond to an angle between a surface of the second housing part 112 and a surface of the third housing part 113 on which the flexible display 150 capable of being folded by the second folding axis 132 of the second hinge assembly 122 is disposed. In an embodiment, the flexible display 150 may be referred to as a display, a deformable display, and/or a deformable panel.

In an embodiment, the first angle 141 may include information indicating an opened state and/or a closed state of a surface of the first housing part 111 and a surface of the second housing part 112. In the opened state of a surface of the first housing part 111 and a surface of the second housing part 112, a portion of the flexible display 150 positioned on the first housing part 111 and the second housing part 112 may be exposed to the outside. In the closed state of a surface of the first housing part 111 and a surface of the second housing part 112, the flexible display 150 positioned on the first housing part 111 and the second housing part 112 may be occluded by the first housing part 111 and/or the second housing part 112. In an embodiment, the second angle 142 may include information indicating an opened state and/or a closed state of a surface of the second housing part 112 and a surface of the third housing part 113. In the opened state of a surface of the second housing part 112 and a surface of the third housing part 113, the second angle 142 may be substantially 180 °. In the closed state of a surface of the second housing part 112 and a surface of the third housing part 113, the second angle 142 may be substantially 0 °.

Referring to FIG. 1, according to an embodiment, the electronic device 101 may include a first speaker 161 and/or a third speaker 163 disposed in the first housing part 111. The electronic device 101 may include a second speaker 162 and/or a fourth speaker 164 disposed in the third housing part 113. The third speaker 163 may be disposed at a second edge of the first housing part 111 opposite to a first edge of the first housing part 111 on which the first speaker 161 is disposed. The fourth speaker 164 may be disposed at a second edge of the third housing part 113 opposite to a first edge of the third housing part 113 on which the second speaker 162 is disposed. Although the second speaker 162 disposed on a surface of the third housing part 113 on which the flexible display 150 is disposed and the first speaker 161, the third speaker 163, and the fourth speaker 164 disposed on a side surface connected to a front side of the electronic device 101 are illustrated, positions of speakers (e.g., the first speaker 161 to the fourth speaker 164) included in the electronic device 101 are not limited to the positions shown in FIG. 1.

Referring to FIG. 1, different states 191, 192, and 193 of the electronic device 101 displaying one or more screens on the flexible display 150 are illustrated. Hereinafter, a screen may refer, for example, to a user interface (UI) displayed in at least a portion of the flexible display 150. For example, the screen may include a window of a window operating system and/or an activity of an android operating system. The screen may be displayed on the flexible display 150 based on execution of a software application and/or a process (e.g., a foreground process). Referring to FIG. 1, in a state 191, the electronic device 101 may display, on the flexible display 150, a first screen based on a size of the flexible display 150 extended from the first housing part 111 to the third housing part 113. The first screen may be generated or/or provided by a first software application executed by the electronic device 101.

In an example state 191 of FIG. 1, the electronic device 101 may display the first screen for user authentication based on a text message. The electronic device 101 may display a visual object 170 including an authentication number (e.g., '91') on the first screen. The electronic device 101 may display text to guide transmitting the authentication number included in the visual object 170 to a specific phone number, in the visual object 170. Based on the visual object 170, the electronic device 101 may cause a user viewing the flexible display 150 to transmit a text message (e.g., a short message service (SMS) message) including the authentication number to the specific phone number. In the state 191, the user viewing the visual object 170 may switch the first software application executed through the flexible display 150 to a second software application (e.g., a messenger application) for transmitting a text message and then perform an action (e.g., transmitting a text message) guided by the visual object 170.

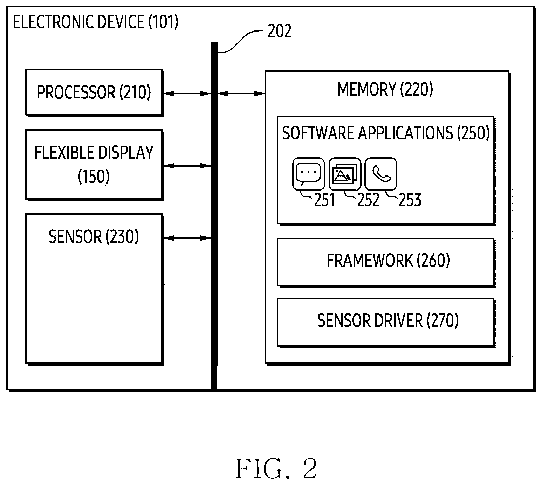

According to an embodiment, the electronic device 101 may provide a function for simplifying a series of operations of a user required for executing the second software application required by the first screen of the first software application and/or displaying a second screen of the second software application. The function may be executed based on a transformation (e.g., rotation) of the electronic device 101 by the first hinge assembly 121 and/or the second hinge assembly 122. In the state 191 in which the first screen of the first software application is displayed, the electronic device 101 may identify a change in any one of the first angle 141 or the second angle 142. The electronic device 101 identifying a change in any one of the first angle 141 or the second angle 142 may simultaneously display the first screen and the second screen, in each of flat portions of the flexible display 150 divided by the changed angle among the first angle 141 or the second angle 142. For example, the electronic device 101 may display the first screen and the second screen based on a multi-window (e.g., split window and/or multi-tasking). In order to identify a change in the first angle and/or the second angle, the electronic device 101 may include one or more sensors. An example hardware configuration of the electronic device 101 including the one or more sensors will be described with reference to FIG. 2.

Referring to FIG. 1, as the third housing part 113 is rotated with respect to the second housing part 112, the electronic device 101 may be switched from the state 191 to the state 192. Based on the rotation of the third housing part 113 with respect to the second housing part 112, the electronic device 101 may identify a change in the second angle 142. Referring to the state 192 of FIG. 1, flat portions of the flexible display 150 may be divided based on the second folding axis 132 by the rotation of the third housing part 113 with respect to the second housing part 112. For example, the flat portions of the flexible display 150 may be divided into a first portion of the flexible display 150 positioned on the third housing part 113 and a second portion of the flexible display 150 positioned on the first housing part 111 and the second housing part 112. Referring to the state 192 of FIG. 1, the electronic device 101 identifying the change in the second angle 142 may display a first screen in the first portion, among the first portion and the second portion, and display a second screen based on execution of the second software application in the second portion.

Referring to the states 191 and 192 of FIG. 1, while being switched from the state 191 to the state 192, a size of the first screen may be reduced from the entire active area (or displaying area) of the flexible display 150 to a size of the first portion of the flexible display 150 positioned on the third housing part 113. For example, in the state 191, the electronic device 101 may display the first screen reduced based on the size of the first portion on the first portion of the flexible display 150.

Referring to FIG. 1, none of a plurality of folding axes (e.g., the first folding axis 131 and the second folding axis 132) included in the electronic device 101 may match a symmetry axis of the electronic device 101. In an embodiment including a plurality of folding axes different from the symmetry axis, the flexible display 150 may be unevenly folded by any one of the plurality of folding axes. In the folded state 192 based on the second folding axis 132, flat portions of the flexible display 150 may be divided into a first portion on the third housing part 113 and a second portion larger than the first portion.

In the example state 192 of FIG. 1, since the second screen is provided from the second software application guided to be executed by the visual object 170 of the first screen, a user who simultaneously views the first screen and the second screen may interact with the second screen among the first screen and the second screen. When the second screen related to the first screen, which has displayed in the state 191, is displayed based on the change in the second angle 142, the electronic device 101 may display the second screen on a relatively large second portion among flat portions of the flexible display 150 divided by the second angle 142, in order to support the interaction between the user and the second screen. In the state 192, since a time and/or possibility in which the user views the second screen in order to transmit the authentication number displayed by the visual object 170 is greater than that of the first screen, the electronic device 101 may display the first screen on the first portion and the second screen on the second portion larger than the first portion. Since the electronic device 101 compares sizes of the flat portions of unevenly folded flexible display 150 and allocates the first screen and the second screen to each of the portions, each of the flat portions of the flexible display may be used more practically.

In the example state 192 of FIG. 1, as the second screen based on a messenger application is displayed on the second portion of the flexible display 150, the electronic device 101 may identify an input (e.g., a user input for inputting an authentication number) related to the first screen through the second screen. For example, the electronic device 101 may identify a user input for inputting and/or transmitting an authentication number through a text box 172, which is a visual object for receiving text from a user. Based on the user input, the electronic device 101 may transmit a text message including text (e.g., authentication number '91') indicated by the user input, by executing a messenger application corresponding to the second screen. In the state 192, since the electronic device 101 simultaneously displays the first screen and the second screen, the user of the electronic device 101 may more conveniently identify text (e.g., authentication number) to be input to the text box 172 of the second screen displayed on the second portion of the flexible display 150, through the first screen displayed on the first portion of the flexible display 150. In the state 192, the electronic device 101 may support transmission of the text message required by the first screen, using the second screen displayed through the second portion having a relatively large size. By the transmission of the text message, user authentication based on the first screen may be completed.

Referring to FIG. 1, as the third housing part 113 is rotated with respect to the second housing part 112 again, the electronic device 101 may be switched from the state 192 to the state 193. For example, in the state 192, a user who has transmitted a text message through the second screen displayed in the second portion may rotate the third housing part 113 with respect to the second housing part 112 again. In the state 193 in which the entire flexible display 150 is substantially flat, the electronic device 101 may display a first screen based on the size of the flexible display 150. For example, the electronic device 101 may cease to display the second screen displayed on the second portion in the state 192, and may display the first screen having the size of the flexible display 150. When the user authentication based on the text message is completed in the state 192, in the state 193 after the state 192, the electronic device 101 may display a visual object 174 indicating completion of the user authentication in the first screen.

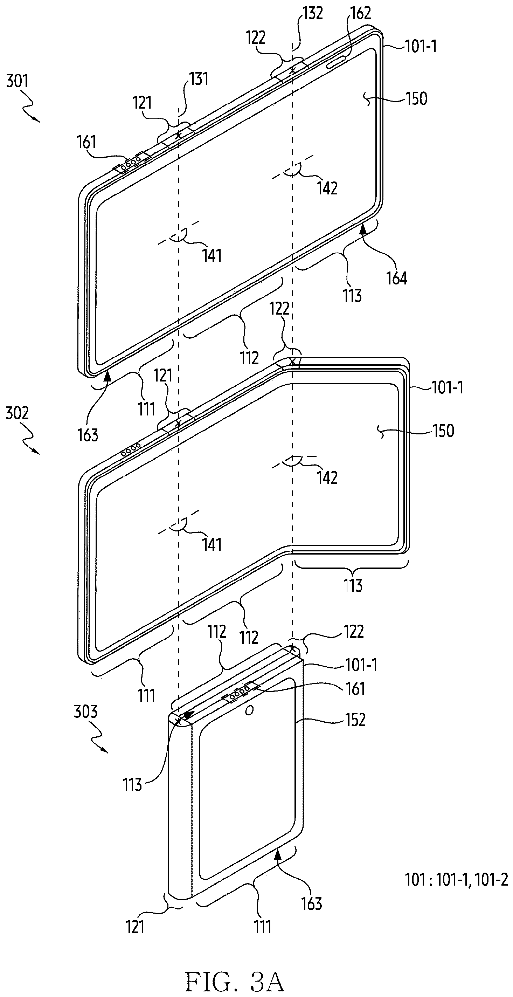

Referring to FIG. 1, states 191, 192, and 193 of the electronic device 101 are switched based on a rotation of the second folding axis 132 are illustrated, but the disclosure is not limited thereto. For example, based on the rotation of the first folding axis 131, flat portions of the flexible display 150 may be divided by the first folding axis 131. In the example, among the flat portions of the flexible display 150 divided by the first folding axis 131, the electronic device 101 may display a first screen, which has displayed on the flexible display 150 before the rotation of the first folding axis 131, on a portion of the flexible display 150 positioned on the first housing part 111, and display a second screen different from the first screen on another portion of the flexible display 150 positioned on the second housing part 112 and the third housing part 113. Different states of the electronic device 101 to be switched by a rotation of the first folding axis 131 and/or the second folding axis 132 will be described with reference to FIGS. 3A to 3B.

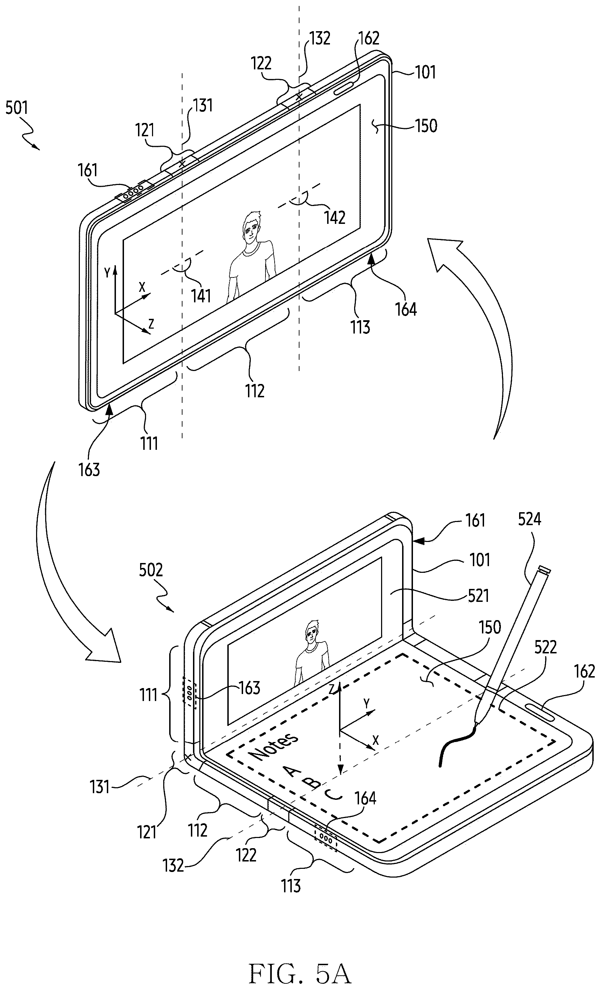

Referring to FIG. 1, an example case of providing a first screen requesting a user authentication and a second screen provided by a messenger application executed for the user authentication is shown, but the disclosure is not limited thereto. Based on the first screen and/or a state of a first software application providing the first screen, the electronic device 101 may execute the second screen to be displayed on the second portion different from the first portion of the flexible display 150 on which the first screen is displayed and/or a second software application corresponding to the second screen. An example operation of the electronic device 101 performed based on execution of the first software application and/or the second software application will be described with reference to FIGS. 3A to 3B. Various example cases will be described in greater detail below with reference to FIGS. 5A to 10.

As described above, according to an embodiment, the electronic device 101 may improve availability and/or continuity of a software application (hereinafter referred to as an application) executed by the electronic device 101, based on a rotation of at least one of a plurality of folding axes. For example, each of the plurality of folding axes may be used as an instant trigger for displaying the second screen related to the first screen being displayed on the flexible display 150. For example, in the state 191 in which transmission of an authentication number is requested, the user of the electronic device 101 may switch to the state 192 in which the second screen for transmitting the authentication number is displayed without an additional touch input for switching the application (e.g., a touch input for executing another application (e.g., a messenger application) for transmitting the authentication number), based on the rotation of the second folding axis 132. In the example, the electronic device 101 may display the second screen more quickly without the touch input, based on the rotation of the second folding axis 132.

Hereinafter, example hardware included in the electronic device 101 to perform the operation of FIG. 1 will be described in greater detail below with reference to FIG. 2.

FIG. 2 is a block diagram illustrating an example configuration of an electronic device 101 according to various embodiments. The electronic device 101 of FIG. 1 may include hardware of the electronic device 101 described with reference to FIG. 2. Referring to FIG. 2, according to an embodiment, the electronic device 101 may include at least one of a processor (e.g., including processing circuitry) 210, a memory 220, a flexible display 150, and a sensor 230. The processor 210, the memory 220, the flexible display 150, and the sensor 230 may be electronically and/or operably coupled with each other by electrical component such as a communication bus 202.

In an embodiment, operational coupling of hardware components of the electronic device 101 may refer, for example, to a direct or indirect connection between hardware components being established by wire or wirelessly, so that a second hardware is controlled by a first hardware among the hardware components. Although illustrated based on different blocks, embodiments are not limited thereto, and a portion (e.g., at least a portion of the processor 210 and the memory 220) of the hardware of FIG. 2 may be included in a single integrated circuit such as a system on a chip (SoC). The hardware components of the electronic device 101 divided into blocks may be located or included in at least one of a first housing part 111, a second housing part 112, or a third housing part 113 described with reference to FIG. 1. The type and/or number of hardware component included in the electronic device 101 is not limited to those illustrated in FIG. 2. For example, the electronic device 101 may include only a portion of the hardware components illustrated based on the blocks in FIG. 2.

In an embodiment, the processor 210 of the electronic device 101 may include hardware and/or circuit for processing data based on one or more instructions. For example, the hardware and/or circuit for processing data may include an arithmetic and logic unit (ALU), a floating point unit (FPU), a field programmable gate array (FPGA), a central processing unit (CPU), and/or an application processor (AP). The number of processors 210 may be one or more. The processor 210 may have a structure of a multi-core processor such as a dual core, a quad core, or a hexa core. The processor 210 according to an embodiment of the disclosure may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

According to an embodiment, the memory 220 of the electronic device 101 may include hardware component for storing data and/or instructions input to and/or output from the processor 210. For example, the memory 220 may include a volatile memory such as a random-access memory (RAM) and/or a non-volatile memory such as a read-only memory (ROM). For example, the volatile memory may include at least one of a dynamic RAM (DRAM), a static RAM (SRAM), a Cache RAM, and a pseudo SRAM (PSRAM). For example, the non-volatile memory may include at least one of a programmable ROM (PROM), an erasable PROM (EPROM), an electrically erasable PROM (EEPROM), a flash memory, a hard disk, a compact disk, a solid state drive (SSD), and an embedded multimedia card (eMMC).

According to an embodiment, the flexible display 150 of the electronic device 101 may output visualized information (e.g., screens of FIGS. 1 and 5A to 10) to a user. For example, the flexible display 150 may be controlled by a controller such as a graphic processing unit (GPU) and/or the processor 210 to output visualized information to the user. The flexible display 150 may include, for example, and without limitation, a liquid crystal display (LCD), a plasma display panel (PDP), and/or one or more light emitting diodes (LEDs). The LED may include an organic LED (OLED). The flexible display 150 may include electronic paper. As described above with reference to FIG. 1, the flexible display 150 may have at least a partially curved shape or/or a deformable shape. Hereinafter, an active area and/or a displaying area of the flexible display 150 may correspond to at least a portion of the flexible display 150 including one or more activated (or enabled) pixels.

According to an embodiment, the flexible display 150 of the electronic device 101 may include a sensor (e.g., a touch sensor panel (TSP)) for detecting an external object (e.g., a user's finger) on the flexible display 150. For example, based on the TSP, the electronic device 101 may detect an external object floating on the flexible display 150 or in contact with the flexible display 150. In response to detecting the external object, the electronic device 101 may execute a function related to a specific visual object corresponding to a position of the external object on the flexible display 150 among visual objects displayed in the flexible display 150.

According to an embodiment, the sensor 230 of the electronic device 101 may generate electronic information capable of being processed by the processor 210 and/or stored in the memory 220 from non-electronic information related to the electronic device 101. For example, the sensor 230 may include a global positioning system (GPS) sensor for detecting a geographic location of the electronic device 101. For example, in addition to the GPS method, the sensor 230 may generate information indicating a geographic location of the electronic device 101 based on a global navigation satellite system (GNSS) such as galileo, beidou, and compass. The information may be stored in the memory 220, processed by the processor 210, and/or transmitted to another electronic device distinct from the electronic device 101 via the communication circuit 240. The sensor 230 is not limited to the described above, and may include an image sensor, an illuminance sensor, a proximity sensor, a grip sensor, and/or a ToF sensor for detecting electromagnetic waves including light.

In an embodiment, the processor 210 of the electronic device 101 may identify a posture, shape, and/or direction of the electronic device 101 using the sensor 230. The sensor 230 may include a hall sensor and/or an inertial measurement unit (IMU) for identifying the posture, shape, and/or direction of the electronic device 101. The hall sensor may include a magnet and a magnetic field sensor measuring a change in a magnetic field formed by the magnet. The magnet and the magnetic field sensor may be disposed at different parts (or portions) of a housing of the electronic device 101. Based on the change in the magnetic field measured by the magnetic field sensor, the Hall sensor may output sensor data indicating a distance between the portions.

For example, in an embodiment in which the electronic device 101 includes a deformable housing, the processor 210 of the electronic device 101 may identify a shape of the housing or a parameter (e.g., the first angle 141 and/or the second angle 142 in FIG. 1) related to the shape, using the hall sensor including the magnet and the magnetic field sensor disposed at different parts (e.g., the first housing part 111, the second housing part 112 and/or the third housing part 113 in FIG. 1) of the housing. For example, the hall sensor may output sensor data indicating the distance and/or the shape of the housing.

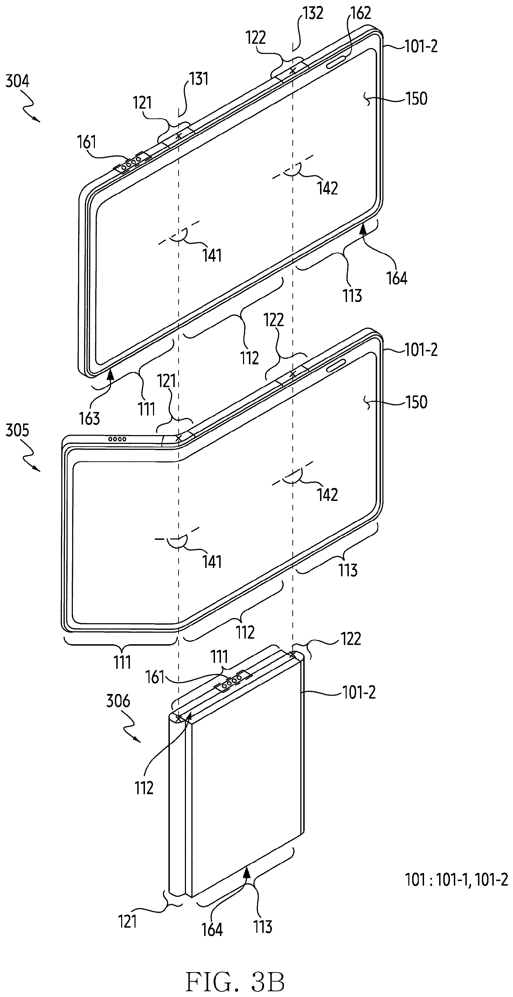

According to an embodiment, the IMU may include an acceleration sensor, a gyro sensor, a geomagnetic sensor, or any combination thereof. The acceleration sensor may output an electrical signal indicating gravity acceleration and/or acceleration of each of a plurality of axes (e.g., x-axis, y-axis, and z-axis) perpendicular to each other. The gyro sensor may output an electrical signal indicating an angular velocity (e.g., an angular velocity based on roll, pitch, and/or yaw) of each of the plurality of axes. The geomagnetic sensor may output an electrical signal indicating a size of a magnetic field formed in the electronic device 101 according to each of the plurality of axes (e.g., x-axis, y-axis, and/or z-axis). The processor 210 may repeatedly obtain data indicating the magnitude of acceleration, angular velocity, and/or magnetic field based on a specified period (e.g., 1 millisecond) from the IMU. The processor 210 may identify parameters (e.g., the first angle 141 and/or the second angle 142 in FIG. 1) related to the shape of the electronic device 101, using the hall sensor and/or the IMU. Based on the parameters, the processor 210 may identify a current shape of the electronic device 101 from among designated shapes (e.g., an unfolded state, a folded state, and/or a sub-folded state described with reference to FIGS. 3A and 3B) for distinguishing a shape of the electronic device 101. For example, the processor 210 of the electronic device 101 may identify the first angle 141 between the first housing part 111 and the second housing part 112 and/or the second angle 142 between the second housing part 112 and the third housing part 113 of FIG. 1, using the sensor 230.

Although not shown, according to an embodiment, the electronic device 101 may include an output means for outputting information in a form other than a visualized form. For example, the electronic device 101 may include a motor for providing haptic feedback based on vibration. For example, the electronic device 101 may include one or more speakers for outputting audio signals, such as the first speaker 161, the second speaker 162, the third speaker 163, and the fourth speaker 164 of FIG. 1.

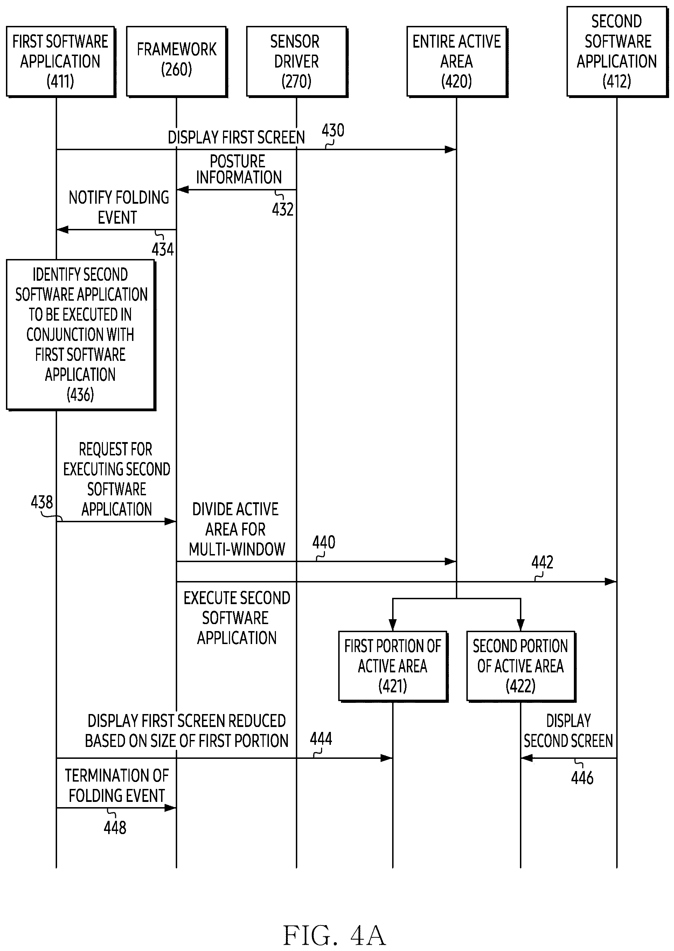

According to an embodiment, one or more instructions (or commands) indicating calculation and/or operation to be performed by the processor 210 on data may be stored in the memory 220 of the electronic device 101. A set of one or more instructions may be referred to as firmware, operating system, process, routine, sub-routine and/or application. For example, the electronic device 101 and/or the processor 210 may perform at least one of operations of FIGS. 4A, 4B, 11 and/or 12 when a set of a plurality of instructions distributed in the form of operating system, firmware, driver, and/or application are executed. Hereinafter, that an application is installed in the electronic device 101 may refer, for example, to one or more instructions provided in the form of application being stored in the memory 220 of the electronic device 101, and that the one or more applications are stored in an executable format (e.g., a file with a designated extension by the operating system of the electronic device 101) by the processor 210 of the electronic device 101.

Referring to FIG. 2, programs (e.g., including executable program instructions) stored in the memory 220 are shown as different blocks. The programs stored in the memory 220 may be divided into software applications 250 (or application software), a framework 260, and/or a sensor driver 270 based on a target. The sensor driver 270 may include a program executed for driving one or more sensors (e.g., the sensor 230) included in the electronic device 101. The framework 260 may include a program (e.g., an operating system including system software and/or kernel) for supporting control of the electronic device 101 based on the software applications 250, a library, and/or an application programming interface (API). The software applications 250 may be installed in the electronic device 101 to execute one or more functions designed to target a user of the electronic device 101.

Referring to FIG. 2, software applications 250 installed in the electronic device 101 are illustrated. For example, a messenger application 251 for exchanging text messages (or media content such as images, videos, and sounds) between users, such as SMS, may be installed in the electronic device 101. For example, a gallery application 252 for browsing one or more media content (e.g., images such as photos and/or videos) stored in the memory 220 of the electronic device 101 may be installed in the electronic device 101. For example, a call application 253 for call connection (e.g., voice over internet protocol (VoIP), voice over long term evolution (VoLTE), voice over new radio (VoNR) and/or voice over fifth generation (Vo5G)) may be installed in the electronic device 101.

In an embodiment, the processor 210 of the electronic device 101 may obtain a screen to be displayed on the flexible display 150 based on execution of at least one of the software applications 250. When a plurality of software applications 250 are executed based on multitasking, the plurality of software applications 250 executed by the processor 210 may be divided into a foreground application corresponding to a screen displayed on the flexible display 150 and a background application different from the foreground application. For example, the background application may be a software application that is executed by the processor 210 but does not create or provide a screen to be displayed on the flexible display 150.

In an embodiment, the processor 210 may display a first screen having a size of the flexible display 150 based on one foreground application. While displaying the first screen, the processor 210 may identify a motion for at least partially folding the flexible display 150 based on the sensor 230. Based on the motion, the processor 210 may identify flat portions of the flexible display 150 divided by the motion. As described above with reference to FIG. 1, the processor 210 identifying that the flexible display 150 is unevenly folded may display the first screen and the second screen provided by another software application, in each of the portions having different sizes, based on execution of another software application different from the foreground application corresponding to the first screen. The processor 210 may allocate the first screen and the second screen to each of the portions based on the sizes of the portions. For example, the processor 210 may display the second screen on a second portion of the flexible display 150 larger than a first portion of the flexible display 150 on which the first screen is displayed.

Hereinafter, an example exterior, form factor, and/or structure of the electronic device 101 including the flexible display 150 partially foldable by the motion are illustrated below with reference to FIGS. 3A and 3B.

FIGS. 3A and 3B are perspective views illustrating examples of a deformable electronic device 101 according to various embodiments. The electronic device 101 of FIGS. 1 and/or 2 may include the electronic device 101 of FIGS. 3A and 3B.

Referring to FIGS. 3A to 3B, different forms of the electronic device 101 supporting deformability based on a plurality of folding axes (e.g., a first folding axis 131 and/or a second folding axis 132) are illustrated. Referring to FIG. 3A, a first electronic device 101-1 including a flexible display 150 to be fully visually occluded by a first housing part 111 to a third housing part 113 folded along the first folding axis 131 and the second folding axis 132 is illustrated. Referring to FIG. 3A, different states (e.g., a first state 301, a second state 302 and/or a third state 303) of the first electronic device 101-1 distinguished by a first angle 141 and a second angle 142 are illustrated. A first state 301 of the first electronic device 101-1 in which the first angle 141 and the second angle 142 are substantially a straight angle (e.g., about 180 °) may be referred to as a fully unfolded state, an opened state, an unfolded state, a flat state, and/or a planar state. In the first state 301, the flexible display 150 disposed from the first housing part 111 to the third housing part 113 across the second housing part 112 may have a substantially flat shape. In the first state 301, a single plane may be formed on a front side of the electronic device 101 on which the flexible display 150 is disposed. In the first state 301, directions of front sides of the first housing part 111, the second housing part 112, and the third housing part 113 may be parallel to each other and/or the same. The state 191 and the state 193 of FIG. 1 may correspond to or be included in the first state 301 and/or the unfolded state of FIG. 3A.

Referring to FIG. 3A, a second state 302 of the first electronic device 101-1 in which the first angle 141 is substantially the straight angle and the second angle 142 is an angle less than the straight angle is illustrated. A state of the first electronic device 101-1 in which the first angle 141 and/or the second angle 142 is less than the straight angle may be referred to as an in-folded state, a sub-unfolded state (or a sub-folded state), an intermediate state, and/or a concave state, the state including the second state 302. Although only a second hinge assembly 122 among a first hinge assembly 121 and the second hinge assembly 122 is shown as folded, the disclosure is not limited thereto, and the sub-folded state may include a state in which both the first angle 141 and the second angle 142 are less than the straight angle and exceed 0 °. In the sub-folded state, a plurality of planes may be formed by the flexible display 150 folded by at least one hinge assembly. Referring to the second state 302, the flexible display 150 bent by the second hinge assembly 122 may include two flat portions distinguished by the second hinge assembly 122. For example, the flat portions of the flexible display 150 distinguished by the second hinge assembly 122 may face different directions that are not parallel. The state 192 of FIG. 1 may correspond to or be included in the second state 302 and/or the in-folded state of FIG. 3A.

Referring to FIG. 3A, the third state 303 of the first electronic device 101-1 in which both the first angle 141 and the second angle 142 are substantially 0 ° may be referred to as a fully folded state, a folded state, and/or a closed state. In the third state 303, the flexible display 150 may be fully visually occluded by the first housing part 111 to the third housing part 113. For example, in the folded state, a size at which the flexible display 150 of the first electronic device 101-1 is exposed to the outside may be substantially 0. Referring to FIG. 3A, an example third state 303 where each of a front side and a rear surface of the third housing part 113 in which a portion of the flexible display 150 (e.g., the first display) is disposed is occluded by the first housing part 111 and the second housing part 112 is illustrated, but the disclosure is not limited thereto. The first electronic device 101-1 including the flexible display 150 fully visually occluded in the folded state may include a cover display 152 (e.g., a second display) disposed on the rear surface opposite to the front side on which the flexible display 150 is disposed. Referring to FIG. 3A, according to an embodiment, the first electronic device 101-1 may include the cover display 152 disposed on the second surface (e.g., the rear surface of the first housing part 111) of the first housing part 111, opposite to the first surface (e.g., the front side of the first housing part 111) on which a portion of the flexible display 150 is disposed.

Referring to FIG. 3A, the first electronic device 101-1 including the flexible display 150 configured to be folded at an angle less than or equal to the straight angle along the first folding axis 131 and the second folding axis 132 may be referred to as a G-shaped foldable electronic device.

Referring to FIG. 3B, different forms of the second electronic device 101-2 including the flexible display 150 configured to be folded at an angle greater than the straight angle along at least one of the first folding axis 131 or the second folding axis 132 are illustrated. The second electronic device 101-2 may be referred to as an S-shaped (or Z-shaped) foldable electronic device.

Referring to FIG. 3B, different states (e.g., a fourth state 304 to a sixth state 306) of the second electronic device 101-2 distinguished by the first angle 141 and the second angle 142 are illustrated. A fourth state 304 of the second electronic device 101-2 may correspond to the first state 301 of the first electronic device 101-1 of FIG. 3A. In the fourth state 304 corresponding to the unfolded state, a flat plane may be formed by the flexible display 150.

Referring to FIG. 3B, a fifth state 305 of the second electronic device 101-2 in which the first angle 141 exceeds the straight angle and the second angle 142 is substantially the straight angle is illustrated. A state of the second electronic device 101-2 in which the first angle 141 and/or the second angle 142 exceeds the straight angle and is less than 360 ° may be referred to as an out-folded state and/or a convex state. Although only the first angle 141 among the first angle 141 and the second angle 142 is illustrated to exceed the straight angle, the disclosure is not limited thereto. In the convex state including the fifth state 305, a plurality of planes formed by the flexible display 150 folded by the first hinge assembly 121 may face different directions.

Referring to FIG. 3B, a sixth state 306 of the second electronic device 101-2 in which the first angle 141 is substantially 360 ° and the second angle 142 is substantially 0 ° may be referred to as a fully folded state, a folded state, and/or a closed state. In the sixth state 306, among portions of the flexible display 150 disposed in each of the first housing part 111 to the third housing part 113, only a portion of the flexible display 150 disposed on the first housing part 111 may be exposed to the outside.

According to an embodiment, the electronic device 101 may identify a state (e.g., any one of the unfolded state, folded state, in-folded state, and/or out-folded state) of the electronic device 101 indicated by the first angle 141 and the second angle 142 based on a sensor (e.g., the sensor 230 of FIG. 2). Based on the state, the electronic device 101 may change the number of software applications to be executed based on the flexible display 150. For example, based on identifying the unfolded state of the electronic device 101, the electronic device 101 may display a first screen based on a size of the flexible display 150. The electronic device 101 identifying switching from the unfolded state to the in-folded state such as in the second state 302 of FIG. 3A, may display a second screen related to the first screen together with the first screen, in each of flat portions of the flexible display 150 in the in-folded state. In response to identifying switching from the in-folded state to the unfolded state, the electronic device 101 for displaying the first screen and the second screen based on the in-folded state may display the first screen on the entire flat flexible display 150.

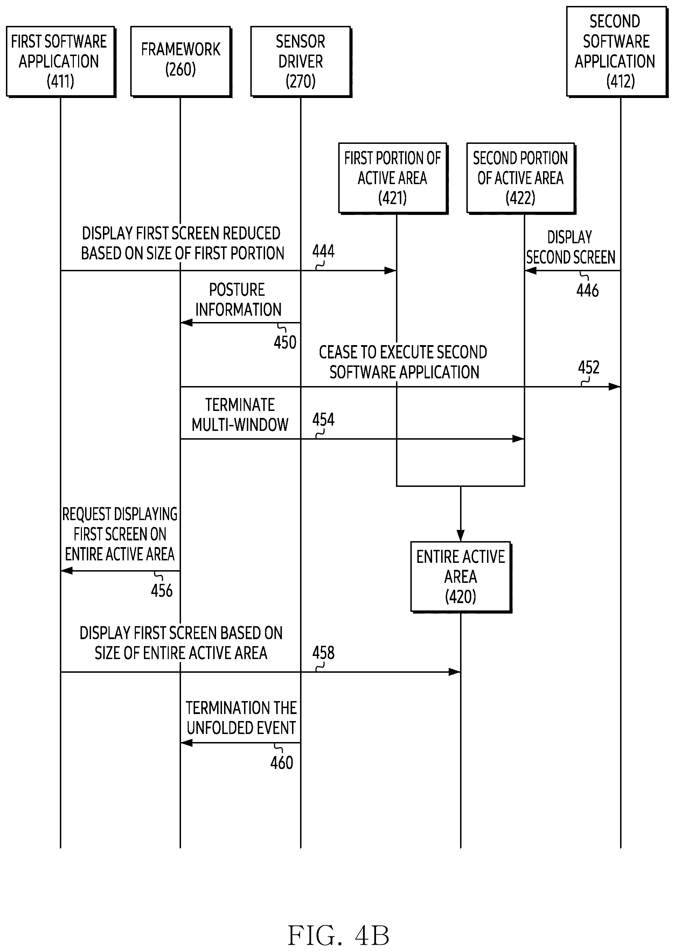

Hereinafter, an example operation of the electronic device 101 executing one or more programs based on the form of the electronic device 101 described with reference to FIGS. 3A to 3B will be described in detail below with reference to FIGS. 4A and 4B.

FIGS. 4A and 4B are signal flow diagrams illustrating example operations of an electronic device according to various embodiments. The electronic device 101 of FIGS. 1 and/or 2 may perform operations described with reference to FIGS. 4A to 4B. For example, the electronic device 101 and/or the processor 210 of FIG. 2 may perform operations described with reference to FIGS. 4A to 4B.

In the following example, each operation may be performed sequentially, but is not necessarily performed sequentially. For example, the sequence of each operation may be changed, and at least two operations may be performed in parallel.

Referring to FIGS. 4A to 4B, operations of the electronic device 101 distinguished based on a process (e.g., thread and/or instance) that is a unit of work executed by a processor of the electronic device will be described. For example, a first software application 411, a framework 260, a sensor driver 270, and a second software application 412 illustrated as different blocks may correspond to each of the processes executed by the processor.

Referring to FIG. 4A, according to an embodiment, in operation 430, the processor of the electronic device may display a first screen on the entire active area 420 of the flexible display (e.g., the flexible display 150 of FIGS. 1 and 2) based on execution of the first software application 411. Width, height, size, and aspect ratio of the first screen displayed on the flexible display based on operation 430 may correspond to each of the width, height, size, and aspect ratio of the active area. The state 191 of FIG. 1 may be an example state in which the first screen is displayed based on operation 430. For example, when directions of front sides of housing parts (e.g., the first housing part 111, the second housing part 112, and the third housing part 113) where the flexible display is located are parallel to each other, such as the unfolded state, the processor may display the screen on the entire active area 420 of the flexible display.

Referring to FIG. 4A, according to an embodiment, in operation 432, the processor of the electronic device may obtain posture information from a sensor (e.g., the sensor 230 of FIG. 2) of the electronic device using the sensor driver 270. In a state that the framework 260 is executed, the processor may perform operation 432. The posture information may be related to forms of the electronic device described with reference to FIGS. 3A to 3B. In order to obtain the posture information, the electronic device may include a sensor (e.g., the sensor 230 of FIG. 2) for identifying motion and/or rotation generated at each folding axes (e.g., the first folding axis 131 and/or the second folding axis 132) of the deformable housing. The posture information may include sensor data output from the sensor. The processor may monitor deformation of the electronic device indicated by the posture information by repeatedly and/or periodically performing operation 432. The processor may perform operation 432 while displaying the first screen based on operation 430.

Referring to FIG. 4A, in operation 434, the processor identifying a folding event based on the posture information obtained based on the operation 432 may notify the folding event to the first software application 411 that provides a first screen displayed through the active area of the flexible display, based on execution of the framework 260. The folding event may be identified by rotation of a hinge assembly (e.g., the first hinge assembly 121 and/or the second hinge assembly 122 of FIG. 1) indicated by the posture information. The folding event may be identified by a change in an angle (e.g., the first angle 141 and/or the second angle 142 in FIG. 1) between housing parts indicated by the posture information. Based on operation 434, the processor may execute a sub-routine (e.g., a sub-routine referred to as event listener) of the first software application 411 corresponding to the folding event.

Referring to FIG. 4A, according to an embodiment, in operation 436, the processor of the electronic device may identify the second software application 412 to be executed in conjunction with the first software application based on the execution of the first software application 411. The second software application 412 may be related to the type and/or state of the first screen displayed on the entire active area 420 based on the first software application. The second software application 412 may be a software application set to be in conjunction with the first screen displayed on the entire active area 420 by instructions of the first software application. Based on operation 436, the processor may identify the second software application 412 to be executed in response to the folding event of operation 434 based on a state of the first software application 411 providing the first screen.

Referring to FIG. 4A, according to an embodiment, in operation 438, the processor of the electronic device may request executing the second software application using the framework 260 based on the execution of the first software application 411. The request may be identified based on API provided by the framework 260. The processor identifying the request based on the execution of the framework 260 may perform at least one of the operations 440 and 442.

Referring to FIG. 4A, according to an embodiment, in operation 440, the processor of the electronic device may divide the active area for a multi-window. The division of the active area may include an operation of allocating portions of the entire active area 420 to a plurality of screens based on a multi-window. Referring to FIG. 4A, based on operation 440, the processor may divide the entire active area 420 into a first portion 421 and a second portion 422. An operation of dividing the entire active area 420 based on operation 440 may include an operation of logically dividing the entire active area 420 of the flexible display. The logical division of the active area may refer, for example, to each portion of the logically divided active area being independently used by a program executed by a processor.

Referring to FIG. 4A, according to an embodiment, in operation 442, the processor of the electronic device may execute the second software application 412 corresponding to the request of operation 438. Since the processor performs operation 438 based on the execution of the first software application 411, the second software application 412 executed based on operation 442 may be a software application indicated by the first software application 411. Based on operation 442, the processor may generate and/or execute a process corresponding to the second software application 412. The processor dividing the entire active area 420 based on operation 440 may allocate the first portion 421 and the second portion 422 of the active area to processes (e.g., processes corresponding to each of the first software application 411 and the second software application 412) executed by the processor. For example, among the first portion 421 and the second portion 422, the processor may allocate the second software application 412 executed based on the operation 442 to the second portion 422 larger than the first portion 421, and may allocate the first software application 411 to the first portion 421.

Referring to FIG. 4A, according to an embodiment, in operation 446, the processor of the electronic device may display the second screen provided from the second software application 412 on the second portion 422 of the active area, based on the second software application 412 executed based on operation 442. For example, the processor may display the second screen having the width, height, size, and/or aspect ratio of the second portion 422 of the active area.

Referring to FIG. 4A, according to an embodiment, in operation 444, the processor of the electronic device may display the first screen reduced based on a size of the first portion 421 based on the execution of the first software application 411. The first screen displayed based on operation 444 may have the width, height, size, and/or aspect ratio of the first portion 421 of the active area.

Referring to FIG. 4A, in a state that the first screen and the second screen are displayed in each the first portion 421 and the second portion 422 of the active area based on operations 444 and 446, the processor may identify termination of the folding event based on operation 448. The termination of the folding event of operation 448 may refer, for example, to completion of the sub-routine of the first software application 411 executed based on operation 434. For example, operations 436, 438, and 444 performed based on the execution of the first software application 411 between operation 434 and operation 448 may be performed by the processor that identifies instructions included in the sub-routine.

Referring to FIG. 4A, as described above, an example operation of an electronic device related to a folding event switched from an unfolded state to an in-folded state will be described. Referring to FIG. 4B, an example operation of an electronic device related to an event (e.g., an unfolded event and/or an opened event) switched from the in-folded state to the unfolded state is described.

Referring to FIG. 4B, while the first screen and the second screen are displayed in each of the first portion 421 and the second portion 422 of the active area based on operations 444 and 446, the processor of the electronic device may obtain posture information from the sensor driver 270 based on operation 450. The processor may obtain or process the posture information of the operation 450 based on the execution of the framework 260. Based on identifying that a state of the electronic device is switched from the in-folded state to the unfolded state based on the posture information, the processor may perform operation 452. Operation 452 may be performed in response to the occurrence of an unfolded event indicated by the posture information. The unfolded event may be identified by motion and/or rotation of folding axes of the housing indicated by the posture information. The unfolded event may be identified by a rotation of the hinge assembly indicated by the posture information. The unfolded event may be identified by a change in an angle between housing parts of the electronic device indicated by the posture information.

Referring to FIG. 4B, according to an embodiment, in operation 452, the processor of the electronic device may cease to execute the second software application 412 based on the execution of the framework 260. Among the first software application 411 and the second software application 412 allocated to each of the first portion 421 and the second portion 422 of the active area, the processor may cease to execute the second software application 412 later executed (e.g., executed based on operation 442 of FIG. 4A). For example, the processor executing the second software application 412 based on a request of the first software application 411 may cease to execute the second software application 412 executed based on the request. After the execution of the second software application 412 is ceased, the processor may cease to display the second screen provided from the second software application 412. The second software application 412 may be switched from a foreground application displaying the second screen on the second portion 422 to a background application, based on operation 452.

Referring to FIG. 4B, according to an embodiment, in operation 454, the processor of the electronic device may terminate multi-window provided based on the first portion 421 and the second portion 422 of the active area, based on the execution of the framework 260. Since the multi-window is terminated based on operation 454, the processor may merge the first portion 421 and the second portion 422 of the active area that have been logically divided. Based on the merging of the first portion 421 and the second portion 422, the processor may allocate the entire active area 420 to one application (e.g., the first software application 411).

Referring to FIG. 4B, according to an embodiment, in operation 456, the processor of the electronic device may identify a request of the framework 260 for displaying the first screen on the entire active area 420, based on the execution of the first software application 411. The request may be identified based on a sub-routine (e.g., an event listener for identifying a change in a size of the active area corresponding to the first software application 411) of the first software application 411 called by the framework 260. In operation 458, the processor identifying the request of operation 456 may display a first screen based on the size of the entire active area 420 based on the execution of the first software application 411. Based on operation 458, similar to operation 430 of FIG. 4A, the processor may display the first screen having the width, height, size, and aspect ratio of the entire active area 420.

Referring to FIG. 4A, in a state that the first screen is displayed on the entire active area 420 based on operation 458, the processor may identify termination of the unfolded event based on operation 460. The termination of the unfolded event of operation 460 may refer, for example, to completion of the sub-routine of the first software application 411 executed based on operation 456.

As described above, according to an embodiment, the processor of the electronic device may control execution of the software application, based on switching between the unfolded state and the in-folded state. The processor may control logical division and/or merging of the active area based on switching between the unfolded state and the in-folded state. When a state of the electronic device is switched from the unfolded state to the in-folded state, the processor may additionally execute a foreground application (e.g., executing the second software application 412). The processor may display screens provided from a foreground application being executed from the unfolded state and an additionally executed foreground application, in each of flat portions of the flexible display divided by the shape of the electronic device in the in-folded state. When a state of the electronic device is switched from the in-folded state to the unfolded state, the processor may cease to execute the other foreground applications and display a screen (e.g., the first screen of operation 458) provided from the foreground application that has been executed before the in-folded state, on the entire active area 420 of the flexible display.

Hereinafter, example operations of an electronic device executing a second software application 412 different according to the type of the first software application 411 will be described in greater detail with reference to FIGS. 5A to 10.

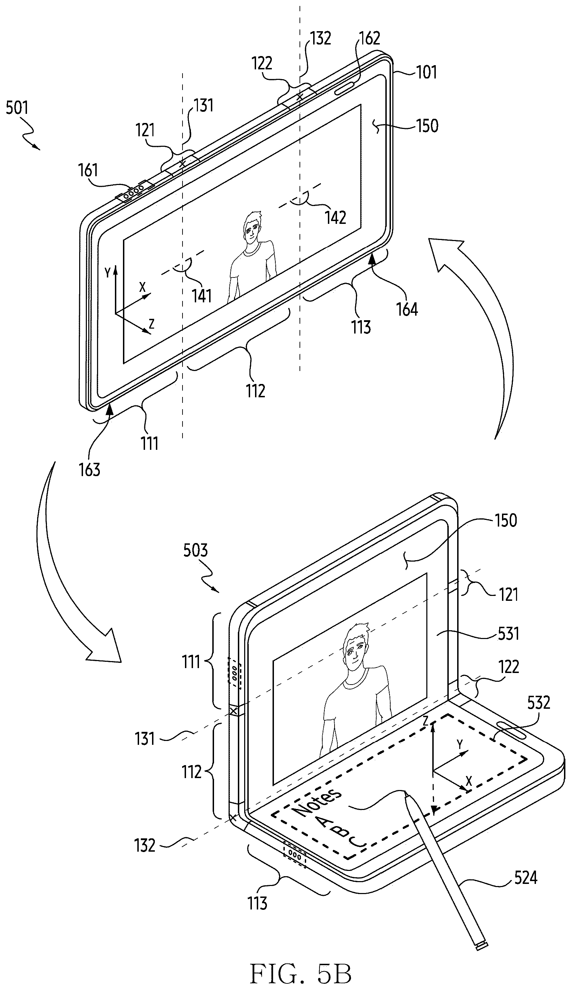

FIGS. 5A and 5B are perspective views illustrating example states 501 and 502 of the electronic device 101 according to various embodiments. The electronic device 101 of FIG. 1 and/or FIG. 2 may perform an operation of the electronic device 101 described with reference to FIG. 5A and/or 5B. For example, the electronic device 101 and/or the processor 210 of FIG. 2 may perform an operation of the electronic device 101 described with reference to FIGS. 5A and/or 5B. An operation of the electronic device 101 described with reference to FIGS. 5A and/or 5B may be related to the operation of the electronic device described with reference to FIGS. 4A and 4B. Although G-shaped foldable electronic device of FIG. 3A is illustrated, an operation described with reference to FIGS. 5A and/or 5B may be performed by Z-shaped foldable electronic device of FIG. 3B.

Referring to FIG. 5A, different states 501 and 502 of the electronic device 101 distinguished by a first angle 141 and/or a second angle 142 of a first hinge assembly 121 and/or a second hinge assembly 122 are illustrated. A state 501 may correspond to an unfolded state in which directions of front sides of the first housing part 111, the second housing part 112, and the third housing part 113 on which the flexible display 150 is disposed are substantially parallel. A state 502 may correspond to an in-folded state in which a direction of a front side of the first housing part 111 among the front sides is substantially perpendicular to directions of front sides of the second housing part 112 and the third housing part 113. Although an operation of the electronic device 101 (e.g., the first electronic device 101-1 of FIG. 3A) in which the flexible display 150 is folded in a concave shape is described, the disclosure is not limited thereto. For example, the electronic device 101 (e.g., the second electronic device 101-2 of FIG. 3B) including the flexible display 150 capable of being folded in a convex shape may also perform an operation described with reference to FIGS. 5A and/or 5B.

In the state 501 of FIG. 5A, according to an embodiment, the electronic device 101 may display a first screen on the entire active area of the substantially flat flexible display 150, based on execution of a first software application (e.g., a software application for playing video stored on the electronic device 101 or streamed from the network via a communication circuit) for playing video. Referring to FIG. 5A, the first screen may at least partially include a video obtained by the first software application. In the unfolded state, the electronic device 101 may display a video on the flexible display 150 so that the x-axis direction of the flexible display 150 match a horizontal direction of the video based on a landscape mode.

Hereinafter, the landscape mode and/or a portrait mode may be distinguished by a reference direction (or a reference orientation) for displaying a screen on the flexible display 150. In the portrait mode, the electronic device 101 may display a screen having a vertical length longer than a horizontal length. In the landscape mode, the electronic device 101 may display a screen having a horizontal length longer than a vertical length. The electronic device 101 may select any one of the landscape mode or the portrait mode based on a position and/or direction of the flexible display 150 with respect to gravity acceleration (or gravity).

Referring to FIG. 5A, in a state 501 corresponding to the unfolded state, the electronic device 101 may identify a rotation in the first hinge assembly 121 and/or the second hinge assembly 122. For example, the electronic device 101 may identify a rotation of the first housing part 111 or the third housing part 113 with respect to the second housing part 112. For example, a user of the electronic device 101 may rotate the first housing part 111 with respect to the second housing part 112 as shown in the state 502 of FIG. 5A. An example state 502 in which a first angle 141 between the first housing part 111 and the second housing part 112 is adjusted to about 90 ° based on the rotation is illustrated, but the disclosure is not limited thereto. The user of the electronic device 101 may lay down the electronic device 101 folded in L-shape based on the rotation on a ground (or a plane substantially parallel to the ground, or substantially flat). For example, the user may locate the electronic device 101 on the ground so that rear surfaces of the second housing part 112 and the third housing part 113 are in contact with the ground. While the rear surfaces of the second housing part 112 and the third housing part 113 are in contact with the ground, a portion of the flexible display 150 positioned on the second housing part 112 and the third housing part 113 may be parallel to the ground. For example, the portion of the flexible display 150 may be perpendicular to a direction of gravity acceleration.

Referring to FIG. 5A, in a state 502 of identifying the rotation of the first housing part 111 with respect to the second housing part 112, the electronic device 101 may simultaneously display a plurality of screens based on execution of a plurality of software applications, on flat portions of the flexible display 150 distinguished by a first folding axis 131. For example, in the state 502 of identifying a change in the first angle 141, the electronic device 101 may display the first screen, which is reduced from a size (e.g., the size of the entire active area) in the state 501 to a size of the first portion, on the first portion of the active area of the flexible display 150 corresponding to the front side of the first housing part 111. In the state 502 after the state 501 displaying the first screen on the entire active area based on the landscape mode, the electronic device 101 may display the first screen reduced based on the landscape mode, on the first portion corresponding to the front side of the first housing part 111. Referring to FIG. 5A, in the first portion, the electronic device 101 may display the first screen having a horizontal direction parallel to the y-axis.

In the state 502 of FIG. 5A, while the first screen is displayed in the first portion of the active area corresponding to the front side of the first housing part 111, the electronic device 101 may obtain a second screen to be displayed on a second portion different from the first portion based on execution of a second software application related to the first screen. The second portion of the active area may include a portion of the active area positioned on the front sides of the second housing part 112 and the third housing part 113. The second software application may be set by the first screen and/or the first software application executed by the electronic device 101. For example, in a setting screen of the first software application, the second software application to be executed on the second screen may be set. For example, the second software application(s) to be executed on the second screen may be set according to operating state(s) and/or mode(s) of the first software application. The electronic device 101 may receive a user input for setting the second software application, through the setting screen of the first software application. The electronic device 101 receiving the user input may store information for executing the second software application on the second screen as a setting value for the first software application. The electronic device 101 may obtain the second screen to be displayed on the second portion by executing the second software application set to be related to the first screen. Referring to the state 502 of FIG. 5A, the electronic device 101 may display the obtained second screen on the second portion of the active area.

Referring to FIG. 5A, in the state 502 in which the first screen is displayed in the first portion based on the landscape mode, the electronic device 101 may display the second screen in the second portion based on a portrait mode different from the landscape mode. For example, based on the width, height, size, and/or aspect ratio of the portions, the electronic device 101 may select or identify modes of each of flat portions of the flexible display 150 among the portrait mode or the landscape mode.

Referring to FIG. 5A, the electronic device 101 may display the first screen and the second screen in each of flat portions of the flexible display 150 distinguished by a curved first folding axis 131. The electronic device 101 may identify or select portions to which the first screen and the second screen are to be displayed based on sizes of the flat portions unevenly distinguished by the first folding axis 131. For example, the electronic device 101 may display the first screen, which has displayed in the unfolded state (e.g., state 501) before the in-folded state (e.g., state 502), on the first portion having a relatively small size among the flat portions of the flexible display 150 in the in-folded state. The electronic device 101 may display the second screen provided from the second software application additionally executed in the in-folded state on a second portion different from the first portion.

Referring to FIG. 5A, the state 502 of the electronic device 101 executing a software application (e.g., a note application) for creating and/or managing a note as a first software application for playing video and/or a second software application set to be related to the first screen displayed by the first software application is illustrated. In the state 502 of displaying the second screen based on the note application, a user of the electronic device 101 may input text and/or image (e.g., handwriting) on the second screen while watching a video played through the first screen. For example, the electronic device 101 may identify an input for drawing one or more strokes through a stylus pen 524 in contact with the second portion of the active area of the flexible display 150 on which the second screen is displayed. Based on the input, the electronic device 101 may display the one or more strokes displayed by the input on the second screen.

Referring to FIG. 5B, different states 501 and 503 of the electronic device 101 distinguished by the first angle 141 and/or the second angle 142 of the first hinge assembly 121 and/or the second hinge assembly 122 are illustrated. The state 501 of FIG. 5B may correspond to the state 501 of FIG. 5A. In the state 501 of FIG. 5B, a user of the HMD device 101 may rotate the third housing part 113 with respect to the second housing part 112. Based on the rotation, an angle between the second housing part 112 and the third housing part 113 may be adjusted to about 90 °. Based on the rotation, a state of the electronic device 101 may be switched from the state 501 of FIG. 5B to the state 503. In the state 503 of FIG. 5B, the user of the electronic device 101 may lay down the electronic device 101 folded in L-shape based on the rotation, on a ground (or a plane substantially parallel to the ground, or substantially flat). For example, the user may locate the electronic device 101 on the ground so that a rear surface of the third housing part 113 is in contact with the ground.

As shown in the state 503 of FIG. 5B, the electronic device 101 identifying a rotation of the third housing part 113 with respect to the second housing part 112 may simultaneously display a plurality of screens based on execution of a plurality of software applications, on the flat portions of the flexible display 150 distinguished by the second folding axis 132. For example, the electronic device 101 may display an execution screen (e.g., for playing video) of the first software application being displayed in the state 501, on a portion 531 of the flexible display 150 positioned on the first housing part 111 and the second housing part 112. For example, the electronic device 101 may display an execution screen of a second software application (e.g., a note application) related to the execution screen of the first software application on a portion 532 of the flexible display 150 positioned on the third housing part 113.

Referring to the state 502 of FIG. 5A and the state 503 of FIG. 5B, based on a rotation identified by each of the first folding axis 131 and/or the second folding axis 132, the electronic device 101 may determine a positional relationship between the first screen displayed in the unfolded state and the second screen to be additionally displayed based on the rotation. For example, in the sub-folded state switched based on a rotation of the first folding axis 131, as shown in the state 502 of FIG. 5A, the electronic device 101 may display the second screen on a flat portion (e.g., a portion 522 of FIG. 5A) of the flexible display 150 having a relatively large size, and display the first screen on a flat portion (e.g., a portion 521 of FIG. 5A) of the flexible display 150 having a relatively small size. For example, in the sub-folded state switched based on the rotation of the second folding axis 132, as shown in the state 503 of FIG. 5B, the electronic device 101 may display the first screen on a flat portion (e.g., the portion 531) of the flexible display 150 having a relatively large size, and display the second screen on a flat portion (e.g., the portion 532) of the flexible display 150 having a relatively small size.

As described above, the electronic device 101 may not display a separate screen (e.g., a launcher screen and/or a home screen) for executing the note application, execute the note application based on a rotation of the first housing part 111 with respect to the second housing part 112, and display the second screen provided from the note application. In a state 502 for providing both the first screen and the second screen based on the in-folded state, when returning to the unfolded state as the first housing part 111 is rotated again with respect to the second housing part 112, the electronic device 101 may cease to execute the second software application that has been additionally executed in the in-folded state, and display the first screen corresponding to the first software application on the entire active area of the flexible display 150. For example, the execution of the second software application may be stopped, ceased, and/or paused by the electronic device 101 switched from the in-folded state to the unfolded state. A state of the second software application may be changed from the foreground state providing the second screen to the second portion to the background state, by the electronic device 101 switched from the in-folded state to the unfolded state.

Referring to FIG. 5A, an operation in which the electronic device 101 identifying the rotation of the first housing part 111 with respect to the second housing part 112 is switched to the state 502 corresponding to the in-folded state from the state 501 corresponding to the unfolded state is described, but the disclosure is not limited thereto. For example, the electronic device 101 may be switched from the state 501 to the in-folded state based on identifying the rotation of the third housing part 113 with respect to the second housing part 112, as shown in the state 502 of FIG. 5A. The electronic device 101 identifying the rotation of the third housing part 113 with respect to the second housing part 112 may display the first screen and the second screen on different portions of the active area divided by the second folding axis 132 between the second housing part 112 and the third housing part 113. For example, the electronic device 101 may display the first screen reduced according to a size of the portion, on a portion of the active area positioned on a front side of the third housing part 113. For example, the electronic device 101 may display the second screen on another portion of the active area positioned on front sides of the first housing part 111 and the second housing part 112.

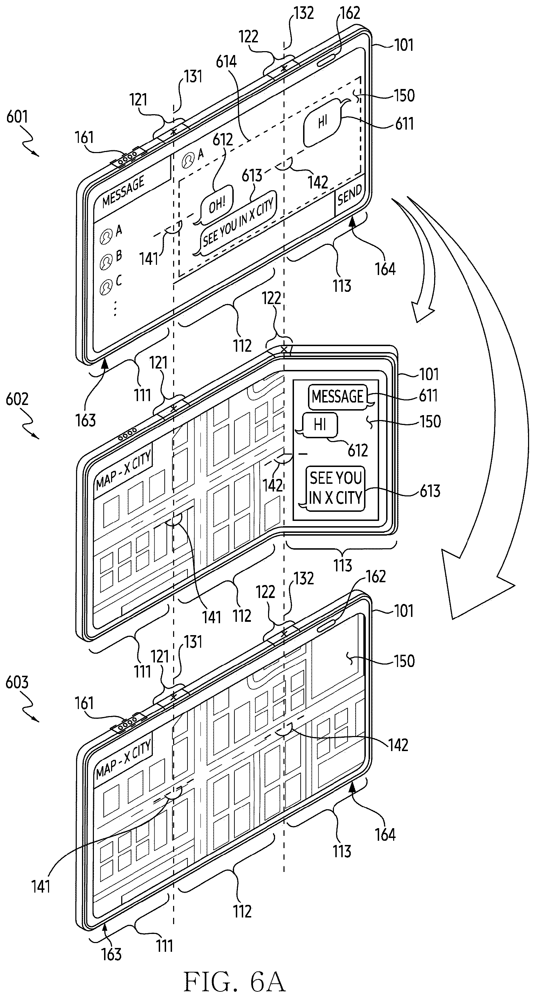

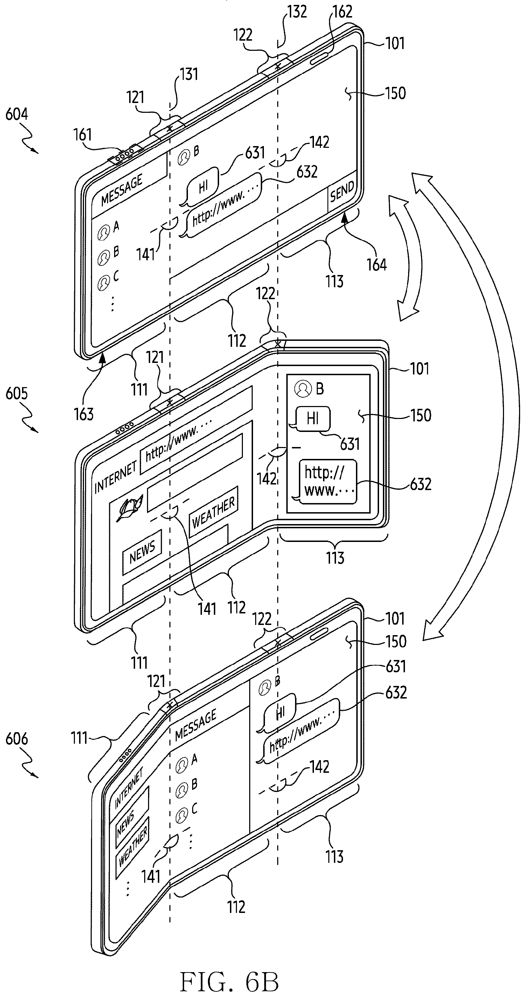

FIGS. 6A and 6B are perspective views illustrating example states 601, 602, 603, 604, 605, and 606 of an electronic device 101, according to various embodiments. The electronic device 101 of FIGS. 1 and/or 2 may perform an operation of the electronic device 101 described with reference to FIGS. 6A and 6B. For example, the electronic device 101 and/or the processor 210 of FIG. 2 may perform an operation of the electronic device 101 described with reference to FIGS. 6A and 6B. The operation of the electronic device 101 described with reference to FIGS. 6A and 6B may be performed. The operation of the electronic device 101 described with reference to FIGS. 6A to 6B may be related to the operation of the electronic device described above with reference to FIGS. 4A and 4B.

Referring to FIGS. 6A and 6B, example states 601 and 604 of the electronic device 101, which are included in an unfolded state and display a first screen provided from a messenger application (e.g., the messenger application 251 of FIG. 2), are illustrated. In the unfolded state, the electronic device 101 may display the first screen on the entire single flat portion of the flexible display 150 based on execution of the messenger application. The electronic device 101 may display a list of one or more chatting rooms related to a user account logged in to the messenger application and one or more messages (e.g., text, image, video, and/or audio) that has been exchanged (e.g., transmitted and/or received) based on one chatting room on the first screen. The one or more messages may be distinguished in the first screen by a visual object having a shape (e.g., a round-shaped rectangle) surrounding a message, such as a bubble.

Referring to the state 601 of FIG. 6A, in the first screen displayed in the landscape mode, the electronic device 101 may sequentially display bubbles 611, 612, and 613 corresponding to each of a plurality of messages along a vertical direction of the first screen. The bubbles 611, 612, and 613 displayed along the vertical direction may be displayed from the top of the first screen in ascending order of moments (or time points) when messages corresponding to the bubbles 611, 612, and 613 has been transmitted. The location in the first screen of each of the bubbles 611, 612, and 613 may be related to a moment and/or author. For example, in a region 614 of the first screen where the bubbles 611, 612, 613 are displayed, the bubbles 611, 612, and 613 may be arranged on any one of a left edge or a right edge of the region 614 based on the author of messages corresponding to the bubbles 611, 612, and 613. For example, the bubble 611 that has been transmitted by the electronic device 101 (e.g., transmitted by the user of the electronic device 101) may be displayed on the right edge of the region 614. For example, the bubbles 612 and 613 that has been received by the electronic device 101 (e.g., transmitted by another user different from the user of the electronic device 101) may be displayed on the left edge of the region 614.

In the state 601 corresponding to the unfolded state, the electronic device 101 may identify a change in the first angle 141 and/or the second angle 142. Referring to FIG. 2, the electronic device 101 may identify a change in the second angle 142 based on one or more sensors (e.g., the sensor 230 of FIG. 2). The electronic device 101 identifying the change in the second angle 142 may switch from the state 601 of FIG. 6A to the state 602. Referring to the state 602 of FIG. 6A, among flat portions of the flexible display 150 divided by the changed second angle 142, the electronic device 101 may display the first screen that has been displayed in the state 601 on a first portion positioned on the third housing part 113 based on a size of the first portion. For example, the electronic device 101 may display the first screen reduced based on the size of the first portion on the first portion. In the state 602 of displaying the first screen, the electronic device 101 may display a second screen based on execution of another software application different from the messenger application corresponding to the first screen. The second screen may be displayed on a second portion different from the first portion on which the first screen is displayed.

In an embodiment, the electronic device 101 may obtain a second screen positioned beyond the second folding axis 132 based on the first screen, by executing a software application related to one or more messages displayed through the first screen. Referring to FIG. 6A, in an example state 602 displaying a bubble 613 including a message indicating a geographic name (e.g., "See you in X City") through the first screen, the electronic device 101 may execute a map application for visualizing a geographic location based on the geographic name based on the message. Based on execution of the map application, the electronic device 101 may display the second screen on the second portion of the flexible display 150 extended from the first housing part 111 to the second housing part 112.

For example, similar to the state 602 switched based on identifying the change in the second angle 142, the electronic device 101 may display the first screen and the second screen in portions of the flexible display 150 distinguished by the first angle 141 in response to identifying the change in the first angle 141. For example, the electronic device 101 may display the first screen on a portion of the flexible display 150 positioned on the first housing part 111, among the portions. The electronic device 101 may display the second screen on another portion of the flexible display 150 extended from the second housing part 112 to the third housing part 113.

Referring to the state 602 of FIG. 6A, based on the execution of the map application, the electronic device 101 may display the second screen including a map image corresponding to the geographic name indicated by the message included in the bubble 613. For example, based on the execution of the map application different from the messenger application corresponding to the first screen, the electronic device 101 may visualize information related to the bubble 613 displayed through the first screen (e.g., the second screen including a map image). In the state 602, the user viewing the flexible display 150 may recognize the map image corresponding to the geographic name indicated by the message of the bubble 613 of the first screen through the second screen.

According to an embodiment, the electronic device 101 may provide a link for executing a map application, in the state 601 displaying the bubble 613 corresponding to a message including a geographic name. The link may be assigned to the bubble 613 and/or text indicating the geographic name in the bubble 613. In the state 601, in response to an input indicating selection of the link, the electronic device 101 may switch to the state 603. In the state 603, the electronic device 101 may display a map image corresponding to the geographic name on the entire active area of the flexible display 150, based on the execution of the map application. In an embodiment, when being changed from the unfolded state to the in-folded state, the electronic device 101 may display the second screen corresponding to the link displayed through the first screen together with the first screen.

As described above, according to an embodiment, the electronic device 101 may adaptively determine a second screen to be displayed in the in-folded state together with the first screen and/or a software application corresponding to the second screen, based on the message and/or content included in the first screen. While displaying the first screen including a plurality of text messages that has received by the electronic device 101 based on the execution of the messenger application, such as the bubbles 611, 612, and 613, the electronic device 101 may determine a second screen to be displayed together with the first screen based on the text messages. For example, when displaying a text message including a geographic name, such as the bubble 613, the electronic device 101 may obtain the second screen to be displayed together with the first screen in the in-folded state, by executing a software application (e.g., a map application) related to the geographic name.

Referring to FIG. 6B, an example state 604 of the electronic device 101 for displaying a first screen provided from a messenger application is illustrated. In the state 604, the electronic device 101 may display bubbles 631 and 632 corresponding to text messages that has received by the electronic device 101. For example, the electronic device 101 may display a first screen including a bubble 632 including a text message including a uniform resource location (URL) and/or a hyperlink on the entire active area of the flexible display 150. The state 604 of FIG. 6B may correspond to the unfolded state of the electronic device 101.

In the state 604 of FIG. 6B, the electronic device 101 may switch to state 605 corresponding to the in-folded state, based on identifying the decrease in the second angle 142. In the state 605, the electronic device 101 may display a first screen that has displayed in the state 604 before the state 605 and a second screen related to the first screen, in each of flat portions of the flexible display 150 distinguished by the second folding axis 132. As described above with reference to FIGS. 4A to 4B, the second screen may be displayed based on the first screen and/or execution of another software application related to the messenger application.

Referring to FIG. 6B, based on the execution of a messenger application displaying the first screen, the electronic device 101 may determine a second screen to be displayed together with the first screen and/or another software application. Among the bubbles 631 and 632 included in the first screen, the electronic device 101 identifying the bubble 632 including the URL may execute a web browser based on the URL. In the example state 605 of FIG. 6B, the electronic device 101 may display a second screen provided from the executed web browser together with the first screen. The second screen may be displayed on the second portion (e.g., the second portion corresponding to front sides of the first housing part 111 and the second housing part 112) larger than the first portion (e.g., the first portion corresponding to a front side of the third housing part 113) of the flexible display 150 on which the first screen is displayed.

Referring to FIG. 6B, based on the decrease in the second angle 142, the electronic device 101 may switch to the state 605 in which the first screen and the second screen are simultaneously displayed based on the decrease in the second angle 142. In the state 605 simultaneously displaying the first screen and the second screen based on the decrease in the second angle 142, the electronic device 101 identifying that the second angle 142 increases again may cease to display the second screen. For example, in the state 605, when directions of front sides of the first housing part 111, the second housing part 112 and the third housing part 113 are changed to be parallel to each other by a rotation of the third housing part 113 with respect to the second housing part 112, the electronic device 101 may cease to display the second screen and display the first screen on the entire active area. For example, the electronic device 101 may display again the first screen based on the size of the flexible display 150, by switching back to the state 604. For example, the second screen set to be related to the first screen may be displayed while a state of the electronic device 101 corresponds to the in-folded state.

In the state 604 of FIG. 6B, the electronic device 101 may switch to the state 606 corresponding to the in-folded state, based on identifying the decrease in the first angle 141. In the state 606, the electronic device 101 may display the first screen that has displayed in the state 604 before the state 606 and the second screen related to the first screen, on each of flat portions of the flexible display 150 distinguished by the first folding axis 131.

Referring to FIG. 6B, the electronic device 101 displaying the first screen based on the execution of the messenger application may determine the second screen to be displayed together with the first screen and/or the software application, based on being switched from the state 604 to the state 606. For example, the electronic device 101 displaying the first screen including the bubble 632 including the URL may execute a web browser for providing the URL-based content based on being switched to the state 606. In the example state 606 of FIG. 6B, the electronic device 101 may display the second screen provided from the web browser together with the first screen.

In the example state 606 of FIG. 6B, the electronic device 101 may display the first screen on a portion having a relatively large size among flat portions of the flexible display 150. For example, on the flexible display 150 including a first region corresponding to the first housing part 111, a second region corresponding to the second housing part 112, and a third region corresponding to the third housing part 113, the electronic device 101 may display the first screen on the second region and the third region among flat portions of the flexible display 150 distinguished by the first folding axis 131. For example, the electronic device 101 may display the second screen related to the first screen on the first region. In the state 606, the electronic device 101 identifying that the first angle 141 is increased to 180° again may display the first screen in all of the first region, the second region, and the third region by switching to the state 604 corresponding to the unfolded state.

In an embodiment, when text messages displayed through the first screen are related to a plurality of applications, the electronic device 101 may execute a software application related to the latest text message among the text messages. For example, when displaying the first screen including all of a first text message (e.g., a text message included in the bubble 613 of FIG. 6A) including a geographic name and a second text message (e.g., a text message included in the bubble 632 of FIG. 6B) including URL, the electronic device 101 may execute a software application related to the latest text message among the text messages, based on identifying a change in any one of the first angle 141 or the second angle 142.

Referring to FIGS. 6A and 6B, an operation of the electronic device 101 based on the change in the second angle 142 is described, but the disclosure is not limited thereto. For example, based on identifying the change in the first angle 141 in the state 604 of FIG. 6B, the electronic device 101 may display the first screen being displayed through the entire active area of the flexible display 150 on a portion of the flexible display 150 positioned on the first housing part 111, and display the second screen (e.g., a screen provided from a web browser) different from the first screen on another portion of the flexible display 150 extended from the second housing part 112 to the third housing part 113.

As described above, according to an embodiment, the electronic device 101 may additionally display information related to a currently being displayed content, based on simple motion of rotating and/or folding two housing parts (e.g., first housing part 111, second housing part 112, and/or third housing part 113) centering the first hinge assembly 121 and/or the second hinge assembly 122.

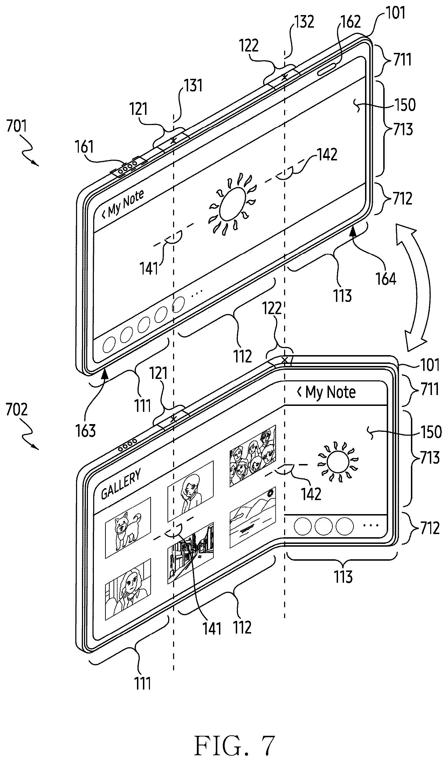

FIG. 7 is a perspective view illustrating example states 701 and 702 of an electronic device 101 according to various embodiments. The electronic device 101 of FIG. 1 and/or FIG. 2 may perform an operation of the electronic device 101 described with reference to FIG. 7. For example, the electronic device 101 and/or the processor 210 of FIG. 2 may perform an operation of the electronic device 101 described with reference to FIG. 7. The operation of the electronic device 101 described with reference to FIG. 7 may be related to the operation of the electronic device described above with reference to FIGS. 4A and 4B.

Referring to FIG. 7, an example state 701 of the electronic device 101 corresponding to an unfolded state is illustrated. In the state 701, the electronic device 101 may display a first screen based on execution of a note application (e.g., the note application described above with reference to FIGS. 5A and 5B) on the entire active area of the flexible display 150. Through the first screen, the electronic device 101 may obtain one or more user inputs for generating media content including text, figure (e.g., a vector graphic object), image, video, audio, or any combination thereof. For example, the first screen may include a title bar 711 including the title of the media content, a preview region 713 set to display at least a portion of the media content based on what you see is what you get (WISWIG), and a toolbar 712 for executing functions for editing the media content. The media content may be a file readable by a note application and may be stored in a memory (e.g., the memory 220 of FIG. 2) of the electronic device 101.

Referring to FIG. 7, in the state 701 corresponding to the unfolded state, the electronic device 101 identifying a rotation of the first housing part 111 or the third housing part 113 with respect to the second housing part 112 may switch from the unfolded state to the in-folded state. Referring to FIG. 7, the electronic device 101 switching to a state 702 corresponding to the in-folded state may display a first screen corresponding to the note application, which has displayed through the flexible display 150, on a first portion among flat portions (e.g., portions distinguished by the second folding axis 132) of the flexible display 150. The electronic device 101 may execute a second screen provided from another software application set by the note application on a second portion different from the first portion and larger than the first portion.

For example, when a gallery application (e.g., the gallery application 252 of FIG. 2) is set to be related to the note application, the electronic device 101 may execute the gallery application and display the second screen provided from the executed gallery application on the second portion of the flexible display 150. The second screen may have the width, height, size, and aspect ratio of the second portion. Referring to the state 702 of FIG. 7, in an embodiment in which sizes of front sides of the first housing part 111, the second housing part 112, and the third housing part 113 match each other, a ratio between a size of the first screen and a size of the second screen may correspond to 1:2.

In the state 702 of FIG. 7, the electronic device 101 may identify an input for storing an image and/or video stored in the electronic device 101 in media content displayed through the first screen using the second screen. For example, based on an input (e.g., drag gesture) for moving thumbnail displayed through the second screen to the first screen, the electronic device 101 may add an image and/or video corresponding to the thumbnail to media content displayed through a preview region 713 of the first screen.

As described above, the electronic device 101 may more quickly execute the first software application (e.g., a second software application (e.g., a gallery application) in conjunction with a note application) executed through the flexible display 150, based on motion of partially folding the flexible display 150. Based on the motion, the electronic device 101 may simultaneously display screens of the first software application and the second software application, which are in conjunction with each other. Using the screens in conjunction with each other, the electronic device 101 may support functions required by executing all of the screens.

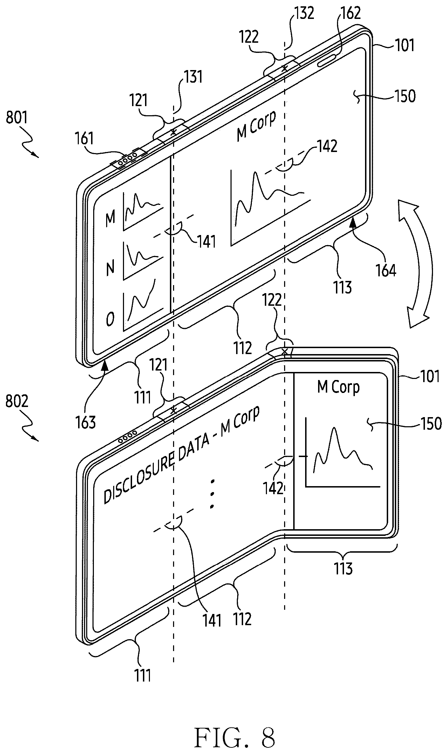

FIG. 8 is a perspective view illustrating example states of an electronic device according to various embodiments. The electronic device 101 of FIGS. 1 and/or 2 may perform an operation of the electronic device 101 described with reference to FIG. 8. For example, the electronic device 101 and/or the processor 210 of FIG. 2 may perform an operation of the electronic device 101 described with reference to FIG. 8. The operation of the electronic device 101 described with reference to FIG. 8 may be related to the operation of the electronic device described above with reference to FIGS. 4A and 4B.

Referring to FIG. 8, an example state 801 of the electronic device 101 displaying a first screen on an outspread (or flat) flexible display 150 by the unfolded state is illustrated. A size of the first screen displayed on the flexible display 150 in the state 801 may be matched to a size of the entire active area of the flexible display 150. In the state 801 of displaying the first screen provided from a mobile trading system (MTS) application, the electronic device 101 may display a stock price of a specific stock.

In the state 801 of FIG. 8, the electronic device 101 that identifies an input (e.g., a rotation input in the first hinge assembly 121 and/or the second hinge assembly 122) for switching from the unfolded state to the in-folded state may switch from the state 801 to the state 802. Based on identifying a rotation of the third housing part 113 with respect to the second housing part 112, the electronic device 101 may switch from the state 801 to the state 802. In the state 802, the electronic device 101 may execute another application (e.g., an electronic disclosure application) for displaying a stock price displayed through the first screen and/or a disclosure corresponding to a specific stock related to the stock price.

In a state 802 of displaying the first screen on a first portion among flat portions of the flexible display 150 in the in-folded state, the electronic device 101 may display the second screen provided from the other application on a second portion different from the first portion. For example, the electronic device 101 may display the second screen in the second portion larger than the first portion. Since the second screen is displayed on the second portion larger than the first portion, the electronic device 101 may highlight and display the second screen, which is relatively likely to be browsed by the user.

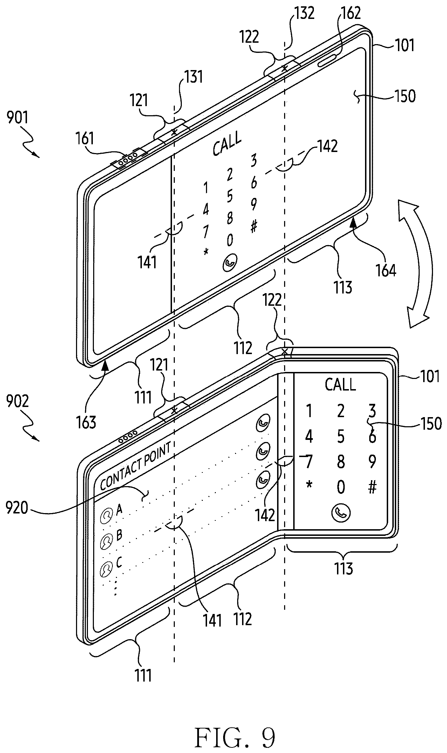

FIG. 9 is a perspective view illustrating example states of an electronic device according to various embodiments. The electronic device 101 of FIG. 1 and/or FIG. 2 may perform an operation of the electronic device 101 described with reference to FIG. 9. For example, the electronic device 101 and/or the processor 210 of FIG. 2 may perform an operation of the electronic device 101 described with reference to FIG. 9. The operation of the electronic device 101 described with reference to FIG. 9 may be related to the operation of the electronic device described above with reference to FIGS. 4A and 4B.

Referring to FIG. 9, a state 901 of the electronic device 101 corresponding to an unfolded state is illustrated. In the state 901, the electronic device 101 may display a first screen based on a size of the flexible display 150. In the state 901 in which a call application is executed, the electronic device 101 may display a first screen provided from the call application. For example, the electronic device 101 may display the first screen including visual objects having the form of a plurality of buttons for inputting a phone number. The visual objects displayed through the first screen may correspond to each of numbers 0 to 9, hash, and asterisk.

Referring to FIG. 9, in the state 901, the electronic device 101 may identify deformation of a housing and/or the flexible display 150 of the electronic device 101. For example, based on a change in the first angle 141 and/or the second angle 142, the electronic device 101 may be switched from the unfolded state to another state (e.g., in-folded state and/or folded state) different from the unfolded state. Referring to FIG. 9, based on a rotation of the third housing part 113 with respect to the second housing part 112, the electronic device 101 may switch from the state 901 to a state 902 corresponding to the in-folded state.

The electronic device 101 that switches to the state 902 from the state 901 displaying the first screen based on the call application may execute another software application related to the call application. For example, the electronic device 101 may execute a contact application set by the call application. In the state 902 of FIG. 9, the electronic device 101 may display a second screen based on the executed contact application on a second portion different from the first portion of the flexible display 150 on which the first screen is displayed. Among flat portions of the flexible display 150, the first portion may correspond to a portion (e.g., a portion of the flexible display 150 positioned on the third housing part 113) having a relatively small extent and/or size. The second portion may correspond to a portion (e.g., a portion of the flexible display 150 extended from the first housing part 111 to the second housing part 112) having a relatively large extent and/or size among the portions. The electronic device 101 may display a contact list as information related to the first screen, through the second screen.

Referring to FIG. 9, in the state 902 in which all of the first screen and the second screen are displayed, the electronic device 101 may execute a function related to the first screen based on an input received through the second screen. For example, in the contact list displayed through the second screen, a visual object 920 corresponding to the contact of a specific user (e.g., "A") may be displayed. In response to an input indicating selection of the visual object 920 on the second screen, the electronic device 101 may attempt a call connection related to the specific user corresponding to the visual object 920, using a call application corresponding to the first screen.

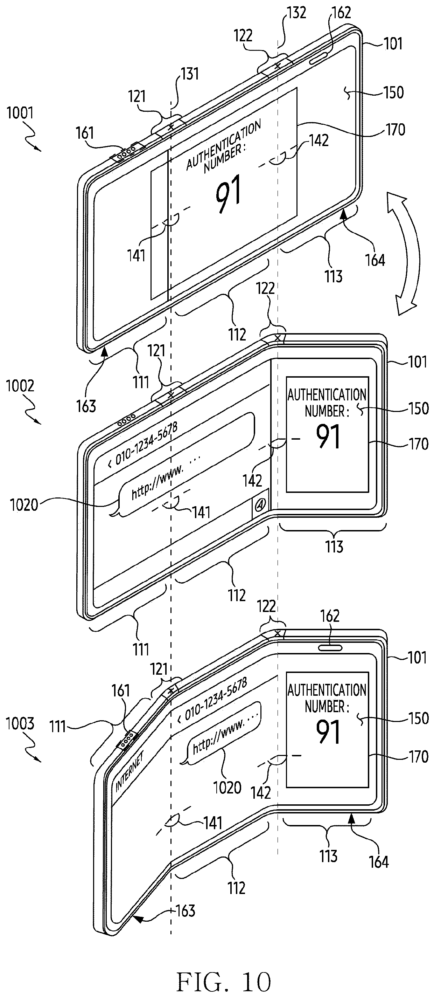

FIG. 10 is a perspective view illustrating example states of an electronic device according to various embodiments. The electronic device 101 of FIG. 1 and/or FIG. 2 may perform an operation of the electronic device 101 described with reference to FIG. 10. For example, the electronic device 101 and/or the processor 210 of FIG. 2 may perform an operation of the electronic device 101 described with reference to FIG. 10. The operation of the electronic device 101 described with reference to FIG. 10 may be related to the operation of the electronic device described above with reference to FIGS. 4A and 4B.

Referring to FIG. 10, different states 1001, 1002, and 1003 of the electronic device 101 distinguished by the form of the electronic device 101 and/or the flexible display 150 are illustrated. In an example state 1001 corresponding to the unfolded state, similar to the state 191 of FIG. 1, the electronic device 101 may display a first screen for authenticating a user. Using a visual object 170 included in the first screen, the electronic device 101 may guide the transmission of the authentication number to the user of the electronic device 101.

In the state 1001 of FIG. 10, the electronic device 101 may switch from the unfolded state to the in-folded state, based on identifying a rotation of the third housing part 113 with respect to the second housing part 112. In the state 1002 corresponding to the in-folded state, the electronic device 101 may display the first screen reduced based on a size of a first portion, on the first portion among flat portions of the flexible display 150 distinguished by the second folding axis 132 between the second housing part 112 and the third housing part 113. The electronic device 101 may display a second screen related to the first screen on a second portion among the flat portions. Similar to the state 192 of FIG. 1, the electronic device 101 may display the second screen for the transmission of the authentication number displayed through the visual object 170. The second screen may be displayed based on execution of a second software application (e.g., a messenger application) distinguished from a first software application providing the first screen.

Referring to FIG. 10, in an embodiment including two folding axes (e.g., the first folding axis 131 and the second folding axis 132), flat portions of the flexible display may be increased by up to three in the in-folded state by a rotation of housing parts based on the two folding axes. In the state 1002 displaying the first screen and the second screen using two flat portions of the flexible display 150, the electronic device 101 may identify a rotation of the first housing part 111 with respect to the second housing part 112. In the state 1002 of simultaneously displaying the first screen and the second screen based on identifying a change in the second angle 142, the electronic device 101 identifying the change in the first angle 141 may display the first screen, the second screen, and a third screen based on execution of a third software application, on each of three flat portions of the flexible display 150 distinguished by the first angle 141 and the second angle 142.

Referring to FIG. 10, in the state 1002, the electronic device 101 identifying a rotation of the first housing part 111 with respect to the second housing part 112 may switch to the state 1003. For example, based on identifying the first angle 141 changed beyond a specified range from an angle (e.g., 180 °) corresponding to the unfolded state, the electronic device 101 may switch to the state 1003. In the state 1003, the electronic device 101 may additionally display the third screen related to the second screen on the flexible display 150. In the states 1002 and 1003, the electronic device 101 may maintain displaying the first screen on the first portion (e.g., a portion of the flexible display 150 positioned on the third housing part 113) among flat portions of the flexible display 150. In the state 1003, the electronic device 101 may display the second screen reduced based on a size of a second portion, on the second portion of the flexible display 150 positioned on the second housing part 112. In the state 1003, the electronic device 101 may display the third screen having a size of a third portion, on the third portion of the flexible display 150 positioned on the first housing part 111.

For example, the third screen may be displayed based on the execution of the third software application set to be related by the second software application corresponding to the second screen. Referring to FIG. 10, in the state 1002 in which the second screen based on a messenger application is displayed on a portion of the flexible display 150 where the first housing part 111 and the second housing part 112 are positioned, the electronic device 101 may display a bubble 1020 corresponding to a text message including URL. In the state 1002 displaying the bubble 1020, the electronic device 101 may execute a web browser for browsing a web page indicated by the URL corresponding to the bubble 1020, based on identifying a rotation of the first housing part 111 with respect to the second housing part 112. Referring to the state 1003 of FIG. 10, based on the executed web browser, the electronic device 101 may display the third screen provided from the web browser, on a portion of the flexible display 150 positioned on the first housing part 111.

As described above, as a plurality of folding axes are sequentially rotated and/or folded, the electronic device 101 may display screens corresponding to the number of flat portions of the flexible display 150 distinguished by at least one of the plurality of folding axes. As the number of flat portions of the flexible display 150 increases while switching from the state 1001 to the state 1003, the electronic device 101 may increase the number of software applications executed through the portions.

In an embodiment, as the number of flat portions of the flexible display 150 decreases while switching from the state 1003 to the state 1001, the electronic device 101 may decrease the number of software applications executed through the portions. For example, in the state 1003 of displaying three screens based on execution of three software applications on each of the flat portions of the flexible display 150, the electronic device 101 may identify that the first angle 141 is increased by a rotation of the first housing part 111 with respect to the second housing part 112. The electronic device 101 identifying that the first angle 141 is increased may switch from the state 1003 to the state 1002. As the state 1003 is switched to the state 1002, the electronic device 101 may cease to display the third screen, which has lastly added or displayed among the screens. For example, the electronic device 101 may cease to execute a third software application (e.g., a web browser) corresponding to the third screen.

In the state 1002 of FIG. 10, the electronic device 101 may identify that the second angle 142 is increased based on a rotation of the third housing part 113 with respect to the second housing part 112. Based on the increase in the second angle 142, the electronic device 101 may switch from the state 1002 to the state 1001. As the state 1002 is switched to the state 1001, the electronic device 101 may cease to display the second screen, which has lastly added among the first screen and the second screen. For example, the electronic device 101 may cease to execute a second software application (e.g., a messenger application) corresponding to the second screen.

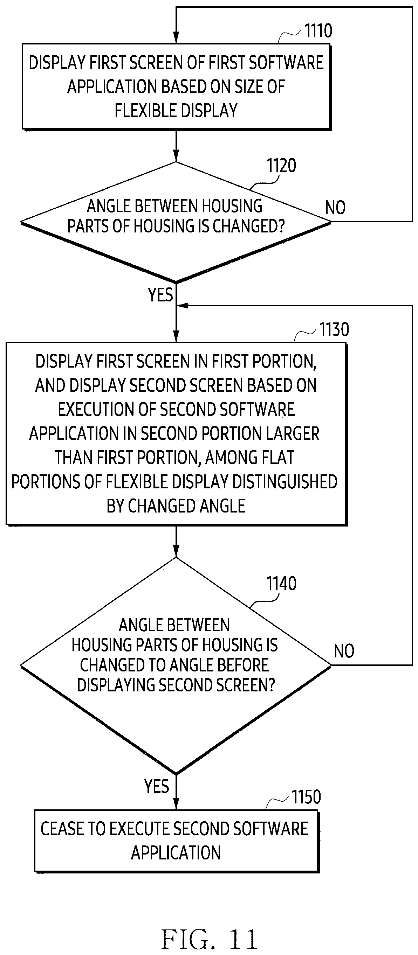

FIG. 11 is a flowchart illustrating example operations of an electronic device according to various embodiments. The electronic device 101 of FIG. 1 and/or FIG. 2 may perform an operation of the electronic device 101 described with reference to FIG. 11. For example, the electronic device 101 and/or the processor 210 of FIG. 2 may perform an operation of the electronic device 101 described with reference to FIG. 11. The operation of the electronic device 101 described with reference to FIG. 11 may be related to the operation of the electronic device described above with reference to FIGS. 4A and 4B. For example, the operation of FIG. 11 may be performed based on the framework 260 of FIGS. 2, 4A and/or 4B.

In an embodiment, each operation may be performed sequentially, but is not necessarily performed sequentially. For example, the sequence of each operation may be changed, and at least two operations may be performed in parallel.

Referring to FIG. 11, according to an embodiment, in operation 1110, the processor of the electronic device may display a first screen of a first software application based on a size of a flexible display (e.g., the flexible display 150 of FIGS. 1 to 10). Operation 1110 may be performed by the processor of the electronic device in the unfolded state. The processor may display the first screen on the entire active area of the unfolded flexible display. A size of the first screen displayed based on the operation 1110 may have a width, height, size, and aspect ratio of the flexible display and/or the active area.

Referring to FIG. 11, according to an embodiment, in operation 1120, the processor of the electronic device may identify whether an angle (e.g., the first angle 141 and/or the second angle 142 of FIG. 1) between housing parts (e.g., the first housing part 111, the second housing part 112 and/or the third housing part 113 of FIG. 1) of a housing is changed. For example, the processor may identify at least one angle between housing parts. While displaying the first screen based on operation 1110, the processor may monitor a shape of the electronic device and/or the flexible display, a posture of the electronic device, and/or one or more angles between housing parts using a sensor (e.g., the sensor 230 of FIG. 2). When the angle between the housing parts is not changed or before the angle between the housing parts is changed (1120-NO), the processor may maintain displaying the first screen having the size of the flexible display based on operation 1110. When the angle between the housing parts is changed (1120-YES), the processor may perform operation 1130.

Referring to FIG. 11, according to an embodiment, in operation 1130, the processor of the electronic device may display a first screen in a first portion, and display a second screen based on the execution of the second software application in a second portion larger than the first portion, among flat portions of the flexible display distinguished by the changed angle. While identifying the change in the angle between the housing parts, the processor may perform operation 1130. The processor may execute a first software application and/or a second software application indicated to be related to the first software application by a setting value. The processor may display the second screen provided from the executed second software application, on the second screen having a large size than the first portion on which the first screen is displayed. Operation 1130 may be performed in the in-folded state in which the flexible display has a plurality of flat portions.

Referring to FIG. 11, according to an embodiment, in operation 1140, the processor of the electronic device may identify whether the angle between the housing parts of the housing is changed to the angle before displaying the second screen. When the angle of operation 1140 is not changed to the angle before displaying the second screen (1140-NO), the processor may maintain simultaneously displaying the first screen and the second screen based on operation 1130. When an angle identified by operation 1120 is changed to the angle before displaying the second screen of operation 1130 (1140-YES), the processor may perform operation 1150. As the angle identified by operation 1120 is changed to the angle before displaying the second screen of operation 1130, a state of the electronic device may be returned to the unfolded state.

Referring to FIG. 11, according to an embodiment, in operation 1150, the processor of the electronic device may cease to execute the second software application. Based on the cessation of execution of the second software application, the processor may cease to display at least partially the second screen on the flexible display. After operation 1150, the processor may display the first screen based on the size of the flexible display again. Operation 1150 may be performed in the unfolded state switched by the angle identified by operation 1140.

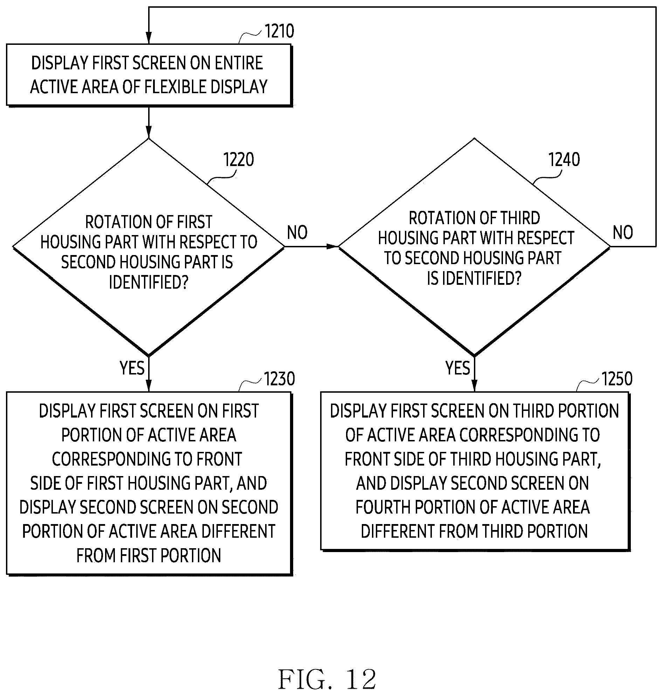

FIG. 12 is a flowchart illustrating example operations of an electronic device according to various embodiments. The electronic device 101 of FIG. 1 and/or FIG. 2 may perform an operation of the electronic device 101 described with reference to FIG. 12. For example, the electronic device 101 and/or the processor 210 of FIG. 2 may perform an operation of the electronic device 101 described with reference to FIG. 12. The operation of the electronic device 101 described with reference to FIG. 12 may be related to the operation of the electronic device described above with reference to FIGS. 4A and 4B. For example, the operation of FIG. 11 may be performed based on the framework 260 of FIGS. 2, 4A and/or 4B.

In an embodiment, each operation may be performed sequentially, but is not necessarily performed sequentially. For example, the sequence of each operation may be changed, and at least two operations may be performed in parallel.

Referring to FIG. 12, according to an embodiment, in operation 1210, the processor of the electronic device may display a first screen on the entire active area of the flexible display. Operation 1210 of FIG. 12 may be performed similarly to operation 1110 of FIG. 11. For example, the processor may perform operation 1210 while identifying the unfolded state of the electronic device based on sensor data of a sensor (e.g., the sensor 230 of FIG. 2). The unfolded state may include a state in which directions of front sides of a plurality of housing parts (e.g., the first housing part 111, the second housing part 112, and the third housing part 113 of FIG. 1) included in the electronic device are identical with each other.

Referring to FIG. 12, according to an embodiment, in operation 1220, the processor of the electronic device may determine whether a rotation of the first housing part with respect to the second housing part is identified. The first housing part and the second housing part in operation 1220 may correspond to the first housing part 111 and the second housing part 112 of FIG. 1. For example, the processor may identify a first angle (e.g., the first angle 141 of FIG. 1) between the first housing part and the second housing part based on a sensor. Based on identifying a first angle corresponding to a state different from the unfolded state (e.g., the sub-folded state) while displaying the first screen in the unfolded state, the processor may perform operation 1230. Based on identifying a rotation of the first housing part with respect to the second housing part (1220-YES), the processor may perform operation 1230. When the rotation of the first housing part with respect to the second housing part is not identified (1220-NO), the processor may perform operation 1240.

Referring to FIG. 12, according to an embodiment, in operation 1230, the processor of the electronic device may display a first screen on a first portion of the active area corresponding to a front side of the first housing part, and display a second screen on a second portion of the active area different from the first portion. In an embodiment in which the electronic device includes three housing parts, the second portion may correspond to the second housing part and the third housing part. A size of the second portion on which the second screen of operation 1230 is displayed may be larger than a size of the first portion on which the first screen of operation 1230 is displayed.

Referring to FIG. 12, according to an embodiment, in operation 1240, the processor of the electronic device may determine whether a rotation of the third housing part with respect to the second housing part is identified. The third housing part of operation 1240 may correspond to the third housing part 113 of FIG. 1. For example, the processor may identify a second angle (e.g., the second angle 142 in FIG. 1) between the second housing part and the third housing part based on a sensor. Based on identifying the second angle corresponding to a state different from the unfolded state (e.g., the sub-folded state) while displaying the first screen in the unfolded state, the processor may perform operation 1250. Based on identifying a rotation of the third housing part with respect to the second housing part (1240-YES), the processor may perform operation 1250. Referring to FIG. 12, when a rotation of any one among a plurality of housing parts is not identified (1240-NO), the processor may maintain displaying the first screen on the entire active area based on operation 1210.

Referring to FIG. 12, according to an embodiment, in operation 1250, the processor of the electronic device may display a first screen on a third portion of the active area corresponding to a front side of the third housing part, and display a second screen on a fourth portion of the active area different from the third portion. For example, the fourth portion may correspond to the first housing part and the second housing part. A size of the fourth portion on which the second screen of operation 1250 is displayed may be larger than a size of the third portion on which the first screen of operation 1250 is displayed.

As described above, according to an embodiment, the electronic device may display different screens on flat portions of the flexible display, which are unevenly divided based on folding of the flexible display. For example, together with a first screen that was being executed in the unfolded state, the electronic device may display a second screen related to the first screen. By displaying the first screen and the second screen in each of the portions, the electronic device may provide a user experience based on the form of a flexible display in the in-folded state. Among the unevenly divided portions, the processor may display a first screen that was being executed in the unfolded state on the first portion having a relatively small size, and display the newly being displayed second screen on the second portion having a relatively large size.

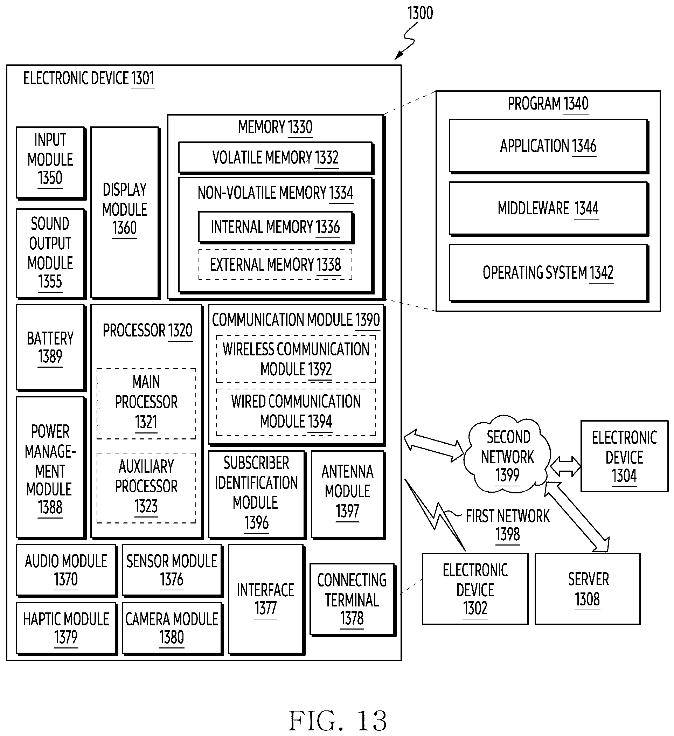

FIG. 13 is a block diagram illustrating an example electronic device 1301 in a network environment 1300 according to various embodiments. The electronic device 1301 of FIG. 13 may be an example of the electronic device 101 of FIGS. 1 to 9, 10A to 10B. Referring to FIG. 13, the electronic device 1301 in the network environment 1300 may communicate with an electronic device 1302 via a first network 1398 (e.g., a short-range wireless communication network), or at least one of an electronic device 1304 or a server 1308 via a second network 1399 (e.g., a long-range wireless communication network). According to an embodiment, the electronic device 1301 may communicate with the electronic device 1304 via the server 1308. According to an embodiment, the electronic device 1301 may include a processor 1320, memory 1330, an input module 1350, a sound output module 1355, a display module 1360, an audio module 1370, a sensor module 1376, an interface 1377, a connecting terminal 1378, a haptic module 1379, a camera module 1380, a power management module 1388, a battery 1389, a communication module 1390, a subscriber identification module (SIM) 1396, or an antenna module 1397. In various embodiments, at least one of the components (e.g., the connecting terminal 1378) may be omitted from the electronic device 1301, or one or more other components may be added in the electronic device 1301. In various embodiments, some of the components (e.g., the sensor module 1376, the camera module 1380, or the antenna module 1397) may be implemented as a single component (e.g., the display module 1360).

The processor 1320 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions. The processor 1320 may execute, for example, software (e.g., a program 1340) to control at least one other component (e.g., a hardware or software component) of the electronic device 1301 coupled with the processor 1320, and may perform various data processing or computation. According to an embodiment, as at least part of the data processing or computation, the processor 1320 may store a command or data received from another component (e.g., the sensor module 1376 or the communication module 1390) in volatile memory 1332, process the command or the data stored in the volatile memory 1332, and store resulting data in non-volatile memory 1334. According to an embodiment, the processor 1320 may include a main processor 1321 (e.g., a central processing unit (CPU) or an application processor (AP)), or an auxiliary processor 1323 (e.g., a graphics processing unit (GPU), a neural processing unit (NPU), an image signal processor (ISP), a sensor hub processor, or a communication processor (CP)) that is operable independently from, or in conjunction with, the main processor 1321. For example, when the electronic device 1301 includes the main processor 1321 and the auxiliary processor 1323, the auxiliary processor 1323 may be adapted to consume less power than the main processor 1321, or to be specific to a specified function. The auxiliary processor 1323 may be implemented as separate from, or as part of the main processor 1321.

The auxiliary processor 1323 may control at least some of functions or states related to at least one component (e.g., the display module 1360, the sensor module 1376, or the communication module 1390) among the components of the electronic device 1301, instead of the main processor 1321 while the main processor 1321 is in an inactive (e.g., sleep) state, or together with the main processor 1321 while the main processor 1321 is in an active state (e.g., executing an application). According to an embodiment, the auxiliary processor 1323 (e.g., an image signal processor or a communication processor) may be implemented as part of another component (e.g., the camera module 1380 or the communication module 1390) functionally related to the auxiliary processor 1323. According to an embodiment, the auxiliary processor 1323 (e.g., the neural processing unit) may include a hardware structure specified for artificial intelligence model processing. An artificial intelligence model may be generated by machine learning. Such learning may be performed, e.g., by the electronic device 1301 where the artificial intelligence is performed or via a separate server (e.g., the server 1308). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1330 may store various data used by at least one component (e.g., the processor 1320 or the sensor module 1376) of the electronic device 1301. The various data may include, for example, software (e.g., the program 1340) and input data or output data for a command related thereto. The memory 1330 may include the volatile memory 1332 or the non-volatile memory 1334.

The program 1340 may be stored in the memory 1330 as software, and may include, for example, an operating system (OS) 1342, middleware 1344, or an application 1346.

The input module 1350 may receive a command or data to be used by another component (e.g., the processor 1320) of the electronic device 1301, from the outside (e.g., a user) of the electronic device 1301. The input module 1350 may include, for example, a microphone, a mouse, a keyboard, a key (e.g., a button), or a digital pen (e.g., a stylus pen).

The sound output module 1355 may output sound signals to the outside of the electronic device 1301. The sound output module 1355 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1360 may visually provide information to the outside (e.g., a user) of the electronic device 1301. The display module 1360 may include, for example, a display, a hologram device, or a projector and control circuitry to control a corresponding one of the display, hologram device, and projector. According to an embodiment, the display module 1360 may include a touch sensor adapted to detect a touch, or a pressure sensor adapted to measure the intensity of force incurred by the touch.

The audio module 1370 may convert a sound into an electrical signal and vice versa. According to an embodiment, the audio module 1370 may obtain the sound via the input module 1350, or output the sound via the sound output module 1355 or a headphone of an external electronic device (e.g., an electronic device 1302) directly (e.g., wiredly) or wirelessly coupled with the electronic device 1301.

The sensor module 1376 may detect an operational state (e.g., power or temperature) of the electronic device 1301 or an environmental state (e.g., a state of a user) external to the electronic device 1301, and then generate an electrical signal or data value corresponding to the detected state. According to an embodiment, the sensor module 1376 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1377 may support one or more specified protocols to be used for the electronic device 1301 to be coupled with the external electronic device (e.g., the electronic device 1302) directly (e.g., wiredly) or wirelessly. According to an embodiment, the interface 1377 may include, for example, a high definition multimedia interface (HDMI), a universal serial bus (USB) interface, a secure digital (SD) card interface, or an audio interface.

A connecting terminal 1378 may include a connector via which the electronic device 1301 may be physically connected with the external electronic device (e.g., the electronic device 1302). According to an embodiment, the connecting terminal 1378 may include, for example, a HDMI connector, a USB connector, a SD card connector, or an audio connector (e.g., a headphone connector).

The haptic module 1379 may convert an electrical signal into a mechanical stimulus (e.g., a vibration or a movement) or electrical stimulus which may be recognized by a user via his tactile sensation or kinesthetic sensation. According to an embodiment, the haptic module 1379 may include, for example, a motor, a piezoelectric element, or an electric stimulator.

The camera module 1380 may capture a still image or moving images. According to an embodiment, the camera module 1380 may include one or more lenses, image sensors, image signal processors, or flashes.

The power management module 1388 may manage power supplied to the electronic device 1301. According to an embodiment, the power management module 1388 may be implemented as at least part of, for example, a power management integrated circuit (PMIC).

The battery 1389 may supply power to at least one component of the electronic device 1301. According to an embodiment, the battery 1389 may include, for example, a primary cell which is not rechargeable, a secondary cell which is rechargeable, or a fuel cell.

The communication module 1390 may support establishing a direct (e.g., wired) communication channel or a wireless communication channel between the electronic device 1301 and the external electronic device (e.g., the electronic device 1302, the electronic device 1304, or the server 1308) and performing communication via the established communication channel. The communication module 1390 may include one or more communication processors that are operable independently from the processor 1320 (e.g., the application processor (AP)) and supports a direct (e.g., wired) communication or a wireless communication. According to an embodiment, the communication module 1390 may include a wireless communication module 1392 (e.g., a cellular communication module, a short-range wireless communication module, or a global navigation satellite system (GNSS) communication module) or a wired communication module 1394 (e.g., a local area network (LAN) communication module or a power line communication (PLC) module). A corresponding one of these communication modules may communicate with the external electronic device via the first network 1398 (e.g., a short-range communication network, such as Bluetooth^{™}, wireless-fidelity (Wi-Fi) direct, or infrared data association (IrDA)) or the second network 1399 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1392 may identify and authenticate the electronic device 1301 in a communication network, such as the first network 1398 or the second network 1399, using subscriber information (e.g., international mobile subscriber identity (IMSI)) stored in the subscriber identification module 1396.

The wireless communication module 1392 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1392 may support a high-frequency band (e.g., the mmWave band) to achieve, e.g., a high data transmission rate. The wireless communication module 1392 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1392 may support various requirements specified in the electronic device 1301, an external electronic device (e.g., the electronic device 1304), or a network system (e.g., the second network 1399). According to an embodiment, the wireless communication module 1392 may support a peak data rate (e.g., 20Gbps or more) for implementing eMBB, loss coverage (e.g., 1364dB or less) for implementing mMTC, or U-plane latency (e.g., 0.5ms or less for each of downlink (DL) and uplink (UL), or a round trip of 13ms or less) for implementing URLLC.

The antenna module 1397 may transmit or receive a signal or power to or from the outside (e.g., the external electronic device) of the electronic device 1301. According to an embodiment, the antenna module 1397 may include an antenna including a radiating element including a conductive material or a conductive pattern formed in or on a substrate (e.g., a printed circuit board (PCB)). According to an embodiment, the antenna module 1397 may include a plurality of antennas (e.g., array antennas). In such a case, at least one antenna appropriate for a communication scheme used in the communication network, such as the first network 1398 or the second network 1399, may be selected, for example, by the communication module 1390 (e.g., the wireless communication module 1392) from the plurality of antennas. The signal or the power may then be transmitted or received between the communication module 1390 and the external electronic device via the selected at least one antenna. According to an embodiment, another component (e.g., a radio frequency integrated circuit (RFIC)) other than the radiating element may be additionally formed as part of the antenna module 1397.

According to various embodiments, the antenna module 1397 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1301 and the external electronic device 1304 via the server 1308 coupled with the second network 1399. Each of the electronic devices 1302 or 1304 may be a device of a same type as, or a different type, from the electronic device 1301. According to an embodiment, all or some of operations to be executed at the electronic device 1301 may be executed at one or more of the external electronic devices 1302, 1304, or 1308. For example, if the electronic device 1301 should perform a function or a service automatically, or in response to a request from a user or another device, the electronic device 1301, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1301. The electronic device 1301 may provide the outcome, with or without further processing of the outcome, as at least part of a reply to the request. To that end, a cloud computing, distributed computing, mobile edge computing (MEC), or client-server computing technology may be used, for example. The electronic device 1301 may provide ultra low-latency services using, e.g., distributed computing or mobile edge computing. In an embodiment, the external electronic device 1304 may include an internet-of-things (IoT) device. The server 1308 may be an intelligent server using machine learning and/or a neural network. According to an embodiment, the external electronic device 1304 or the server 1308 may be included in the second network 1399. The electronic device 1301 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1340) including one or more instructions that are stored in a storage medium (e.g., internal memory 1336 or external memory 1338) that is readable by a machine (e.g., the electronic device 1301). For example, a processor (e.g., the processor 1320) of the machine (e.g., the electronic device 1301) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added. The electronic device 101 of FIG. 13 may be an example of the electronic device 101 described with reference to FIGS. 1 to 10.

In an example embodiment, a method of executing one or more software applications based on a form of a flexible display foldable by a plurality of folding axes may be required. As described above, according to an example embodiment, a multi-foldable electronic device (e.g., the electronic device 101 of FIGS. 1 to 10 and/or the electronic device 1301 of FIG. 13) may include a first housing, a second housing, and a third housing. The second housing may be rotatably coupled to a side of the first housing, and the third housing may be rotatably coupled to another side of the first housing. The multi-foldable electronic device may include a flexible display disposed on a first surface of the first housing, a second surface of the second housing, and a third surface of the third housing, one or more sensors (e.g., the sensor 230 of FIG. 2) for configured to identify a first angle (e.g., the first angle 141 in FIGS. 1 to 10) between the first housing and the second housing and a second angle (e.g., the second angle 142 in FIGS. 1 to 10) between the first housing and the third housing, memory (e.g., the memory 220 of FIG. 2) for storing instructions, and at least one processor, comprising processing circuitry (e.g., the processor 210 of FIG. 2), individually and/or collectively, configured to execute the instructions by accessing the memory. At least one processor, individually and/or collectively, may be configured to control the electronic device to: display a first screen of a first application on the flexible display while executing the first application in the unfolded state of the first housing assembly, the second housing assembly, and the third housing assembly. At least one processor, individually and/or collectively, may be configured to detect any one of the first angle or the second angle based on the one or more sensors while displaying the first screen. At least one processor, individually and/or collectively, may be configured to display a second screen for executing the first application and a third screen for executing a second application related to the second screen on the flexible display, based on the detected first angle or the second angle.

For example, the flexible display may be extended from the second surface of the second housing to the third surface of the third housing across the first surface of the first housing.

For example, at least one processor, individually and/or collectively, may be configured to control the electronic device to display, in a first portion among flat portions of the flexible display distinguished by a changed angle of the first angle or the second angle, a second screen reduced based on a size of the first portion, and display a third screen in a second portion larger than the first portion.

For example, at least one processor, individually and/or collectively, may be configured to control the electronic device to display, in a state that both the first angle and the second angle are changed, the second screen in a first portion among portions of the flexible display distinguished by the second angle changed to be greater than the first angle, and the third screen in a second portion larger than the first portion.

For example, at least one processor, individually and/or collectively, may be configured to control the electronic device to: display, based on execution of the first application, including a messenger application (e.g., the messenger application 251 of FIG. 2), a first screen including a plurality of text messages received by the multi-foldable electronic device. At least one processor, individually and/or collectively, may be configured to execute the second application associated with latest text message among the plurality of text messages, based on identifying the first angle corresponding to a state different from the unfolded state or the second angle.

For example, at least one processor, individually and/or collectively, may be configured to, while displaying the latest message including a uniform resource location (URL), execute, based on identifying the first angle corresponding to a state different from the unfolded state or the second angle, the second application including a web browser based on the URL.

For example, at least one processor, individually and/or collectively, may be configured to, while displaying the latest message including a geographic name, display the third screen including a map image corresponding to the geographic name by executing the second application including a map application, based on identifying the first angle corresponding to a state different from the unfolded state or the second angle.

For example, at least one processor, individually and/or collectively, may be configured to: identify a folding event of the multi-foldable electronic device and the flexible display based on identifying the first angle corresponding to a state different from the unfolded state or the second angle. At least one processor, individually and/or collectively, may be configured to identify the second application to be executed in response to the folding event based on identifying the first angle corresponding to a state different from the unfolded state or the second angle.

For example, at least one processor, individually and/or collectively, may be configured to control the electronic device to display, in the unfolding state, the first screen based on the size of the flexible display.

For example, at least one processor, individually and/or collectively, may be configured to control the electronic device to: display the second screen on a first portion of the flexible display positioned on the second surface, and display the third screen on the second portion of the flexible display, positioned on the first surface and the third surface based on identifying the change in the first angle.

For example, at least one processor, individually and/or collectively, may be configured to control the electronic device to, while displaying the second screen in the first portion and displaying the third screen in the second portion, cease to display the third screen on the second portion and display the first screen on the flexible display based on a size of the flexible display, based on identifying that the first angle increases to a straight angle.

For example, at least one processor, individually and/or collectively, may be configured to control the electronic device to, while displaying the second screen in the first portion and displaying the third screen in the second portion, display the second screen, the third screen, and a fourth screen based on execution of a third application related to the third screen on each of flat portions of the flexible display divided by the first angle and the second angle, based on identifying the change in the second angle.

For example, at least one processor, individually and/or collectively, may be configured to control the electronic device to display the second screen on the first portion of the flexible display positioned on the third surface, and display the third screen on the second portion of the flexible display positioned on the first surface and the second surface, based on identifying the change in the second angle based on the one or more sensors.

For example, at least one processor, individually and/or collectively, may be configured to control the electronic device to display the third screen on the second portion perpendicular to a direction of gravitational acceleration identified by the one or more sensors, among the flat portions of the flexible display.

As described above, according to an example embodiment, a method of operating a multi-foldable electronic device may include displaying, while a first application is executed in an unfolded state of a first housing, a second housing, and a third housing of the multi-foldable electronic device, a first screen of the first application on a flexible display disposed on a first surface of the first housing, the second housing, and the third housing. The method may comprise identifying a first angle between the first housing and the second housing assembly or a second angle between the first housing assembly and the third housing assembly, based on one or more sensors of the multi-foldable electronic device, while displaying the first screen. The method may comprise displaying a second screen executing the first application and a third screen executing a second application related to the second screen on the flexible display, based on the identified first angle or the second angle.

For example, the displaying the first screen may comprise: displaying, based on execution of the first application, including a messenger application, a first screen including a plurality of text messages that has received by the multi-foldable electronic device. The displaying the third screen may comprise executing the second application associated with latest text message among the plurality of text messages, based on identifying the first angle corresponding to a state different from the unfolded state or the second angle.

For example, the executing may comprise, while displaying the latest message including URL, executing based on identifying the first angle corresponding to a state different from the unfolded state or the second angle, the second application that is a web browser based on the URL.

For example, the displaying the second screen and the third screen may comprise, while displaying the latest message including a geographic name, displaying the third screen including a map image corresponding to the geographic name by executing the second application that is a map application, based on identifying the first angle corresponding to a state different from the unfolded state or the second angle.

For example, the identifying may comprise identifying a folding event of the multi-foldable electronic device and the flexible display based on identifying the first angle corresponding to a state different from the unfolded state or the second angle. The identifying may comprise identifying the second application to be executed in response to the folding event based on identifying the first angle corresponding to a state different from the unfolded state or the second angle.

For example, the displaying may comprise displaying, in the unfolding state of the multi-foldable electronic device, the first screen based on the size of the flexible display.

For example, the displaying the second screen and the third screen may comprise displaying the second screen on a first portion of the flexible display positioned on the second housing, and displaying the third screen on the second portion of the flexible display, positioned on the first housing and the third housing based on identifying the change in the first angle, based on the one or more sensors.

For example, the method may comprise, while displaying the second screen in the first portion and displaying the third screen in the second portion, ceasing to display the third screen on the second portion and displaying the first screen on the flexible display based on a size of the flexible display, based on identifying that the first angle increases to a straight angle.

For example, the method may comprise, while displaying the second screen in the first portion and displaying the third screen in the second portion, displaying the second screen, the third screen, and a fourth screen based on execution of a third application related to the third screen on each of flat portions of the flexible display divided by the first angle and the second angle, based on identifying the change in the second angle.

For example, the displaying the second screen and the third screen may comprise displaying the second screen on the first portion of the flexible display positioned on the third housing, and displaying the third screen on the second portion of the flexible display positioned on the first housing and the second housing, based on identifying the change in the second angle based on the one or more sensors.

As described above, according to an example embodiment, a multi-foldable electronic device (e.g., the electronic device 101 of FIGS. 1 to 10 and/or the electronic device 1301 of FIG. 13) may include: a multi-foldable housing including a first housing, a second housing rotatably coupled to a side of the first housing, and a third housing rotatably coupled to another side of the first housing, a flexible display (e.g., the flexible display 150 of FIGS. 1 to 10) disposed on a front side of the first housing, the second housing, and the third housing, at least one sensor (e.g., the sensor 230 of FIG. 2) configured to identify a first angle (e.g., the first angle 141 of FIGS. 1 to 10) between the first housing and the second housing and a second angle (e.g., the second angle 142 of FIGS. 1 to 10) between the first housing and the third housing, memory (e.g., the memory 220 of FIG. 2) storing instructions, and at least one processor, comprising processing circuitry (e.g., the processor 210 of FIG. 2). At least one processor, individually and/or collectively, may be configured to, based on directions of front sides of the first housing, the second housing, and the third housing in which the flexible display is located being parallel to each other, control the electronic device to display a first screen based on execution of at least one application on the entire active area of the flexible display when executing the at least one application. At least one processor, individually and/or collectively, may be configured to, based on identifying a rotation of the second housing while displaying the first screen, display the first screen based on the execution of the at least one application in a first region of the flexible display corresponding to the front side of the second housing, and display a second screen related to the first screen in a second region and a third region of the flexible display corresponding to front sides of the first housing and the third housing. At least one processor, individually and/or collectively, may be configured to, based on identifying a rotation of the third housing with respect to the second housing while displaying the first screen, display the first screen based on execution of the at least one application on a third region of the flexible display corresponding to the front side of the third housing based on identifying the rotation of the third housing, and display a second screen related to the first screen on a first region and a second region of the flexible display corresponding to front sides of the first housing and the second housing.

For example, at least one processor, individually and/or collectively, may be configured to, based on identifying the rotation, control the electronic device to display the second screen, by executing a second software application displayed by the first software application providing the first screen.

For example, at least one processor, individually and/or collectively, may be configured to control the electronic device to, based on other rotations of the second housing or the third housing with respect to the first housing after displaying the first screen and the second screen, cease to display the second screen and display the first screen on the entire active area, in response to identifying that the directions of the surfaces are changed to be parallel to each other.

As described above, according to an example embodiment, a method of operating a multi-foldable electronic device may include, based on directions of front sides of a first housing, a second housing, and a third housing in which a flexible display of the multi-foldable electronic devices is positioned being parallel to each other, displaying (e.g., operation 1210 of FIG. 12) a first screen on the entire active area of the flexible display. The method may comprise, based on identifying a rotation of the second housing while displaying the first screen, displaying the first screen based on the execution of the at least one application on a first region of the flexible display corresponding to the front side of the second housing, and displaying (e.g., operation 1230 of FIG. 12) a second screen related to the first screen on a second region and a third region of the flexible display corresponding to front sides of the first housing and the third housing. The method may comprise based on identifying a rotation of the third housing while displaying the first screen, displaying the first screen based on execution of the at least one application on a third region of the flexible display corresponding to the front side of the third housing, and displaying (e.g., operation 1250 of FIG. 12) a second screen related to the first screen on a first region and a second region of the flexible display corresponding to front sides of the first housing and the second housing.

For example, the displaying the second screen may comprise, based on identifying the rotation, displaying the second screen, by executing a second software application displayed by the first software application providing the first screen.

For example, the method may comprise, based on other rotations of the second housing or the third housing with respect to the first housing after displaying the first screen and the second screen, ceasing to display the second screen and displaying the first screen on the entire active area, in response to identifying that the directions of the surfaces are changed to be parallel to each other.

As described above, according to an example embodiment, a multi-foldable electronic device may comprise: a first housing, a second housing rotatably coupled to a side of the first housing, a third housing rotatably coupled to another side of the first housing, a flexible display including a first region corresponding to the first housing, a second region corresponding to the second housing and a third region corresponding to the third housing, a first sensor configured to provide information related to a first angle between the first housing and the second housing, a second sensor configured to provide information related to a second angle between the first housing and the third housing, at least one processor, comprising processing circuitry, and memory storing instructions. The instructions, when executed by at least one processor, individually and/or collectively, may cause the electronic device to, while executing a first application in an unfolding state of the first housing, the second housing and the third housing, display an execution screen of the first application on the first region, the second region and the third region of the flexible display. The instructions, when executed by at least one processor, individually and/or collectively, may cause the electronic device to, while displaying the execution screen of the first application on the first region, the second region and the third region of the flexible display, identify any one of the second housing and the third housing that is being folded with respect to the first housing based on information from the first sensor and the second sensor. The instructions, when executed by at least one processor, individually and/or collectively, may cause the electronic device to display an execution screen of the first application on the second region of the flexible display and an execution screen of a second application on the first region and the third region of the flexible display, based on identifying that the second housing is folded with respect to the first housing. The instructions, when executed by at least one processor, individually and/or collectively, may cause the electronic device to display an execution screen of the first application on the first region and the second region of the flexible display and an execution screen of a second application on the third region of the flexible display, based on identifying that the third housing is folded with respect to the first housing.

For example, the flexible display may be extended from a first surface of the second housing to a third surface of the third housing across a second surface of the first housing.

For example, at least one processor, individually and/or collectively, may be configured to cause the electronic device to: display, in a first portion among flat portions of the flexible display, the execution screen of the first application reduced based on a size of the first portion, and display the execution screen of the second application in a second portion larger than the first portion, based on identifying any one of the second housing or the third housing folded with respect to the first housing.

For example, at least one processor, individually and/or collectively, may be configured to control the electronic device to: display, in a state that both the first angle and the second angle are changed, the second screen in a first portion among portions of the flexible display distinguished by the second angle changed greater than the first angle, and the third screen in a second portion larger than the first portion.

For example, at least one processor, individually and/or collectively, may be configured to control the electronic device to display, based on execution of the first application, which is a messenger application, the execution screen of the first application including a plurality of text messages that has received by the multi-foldable electronic device. At least one processor, individually and/or collectively, may be configured to execute, based on identifying any one of the third housing or the second housing that is folded with respect to the first housing, the second application associated with latest text message among the plurality of text messages.

For example, at least one processor, individually and/or collectively, may be configured to, while displaying the latest message including a uniform resource location (URL), execute, based on identifying any one of the second housing or the third housing that is folded with respect to the first housing, the second application that is a web browser based on the URL.

For example, at least one processor, individually and/or collectively, may be configured to control the electronic device to, while displaying the latest message including a geographic name, display, based on identifying any one of the second housing or the third housing that is folded with respect to the first housing, the third screen including a map image corresponding to the geographic name by executing the second application including a map application.

For example, at least one processor, individually and/or collectively, may be configured to control the electronic device to identify a folding event of the multi-foldable electronic device and the flexible display based on identifying any one of the second housing or the third housing folded with respect to the first housing. At least one processor , individually and/or collectively, may be configured to identify the second application to be executed in response to the folding event based on a state of the first application corresponding to the execution screen displayed on the first region, the second region, and the third region.

For example, at least one processor, individually and/or collectively, may be configured to control the electronic device to display, in the unfolding state, the execution screen based on the size of the flexible display.

For example, at least one processor, individually and/or collectively, may be configured to control the electronic device to, while displaying the execution screen of the second application and the execution screen of the first application based on identifying any one of the second housing or the third housing that is folded with respect to the first housing, cease, based on whether to switch to the unfolding state again, to display the execution screen of the second application, and display the execution screen of the first application on the first region, the second region and the third region.

For example, at least one processor, individually and/or collectively, may be configured to control the electronic device to, display the execution screen of the second application in a portion perpendicular to a direction of acceleration of gravity, based on identifying any one of the second housing or the third housing folded with respect to the first housing, among flat portions of the flexible display.

As described above, according to an example embodiment, a method of operating a multi-foldable electronic device may comprise displaying, while executing a first application in an unfolding state of a first housing, a second housing and a third housing of the multi-foldable electronic device, an execution screen of the first application on a first region, a second region and a third region. The method may comprise identifying, while displaying the execution screen of the first application on the first region, the second region and the third region, based on information from a first sensor and a second sensor, any of the second housing and the third housing folded with respect to the first housing. The method may comprise displaying, based on identifying that the second housing is folded with respect to the first housing, an execution screen of the first application on the second region of the flexible display and displaying an execution screen of the second application on the first region and the third region of the flexible display. The method may comprise displaying, based on identifying that the third housing is folded with respect to the first housing, an execution screen of the first application on the first region and the second region of the flexible display, and displaying an execution screen of the second application on the third region of the flexible display.

For example, the displaying the execution screen of the first application may comprise displaying, based on execution of the first application, including a messenger application, the execution screen including a plurality of text messages that has been received by the multi-foldable electronic device. The second application may be associated with latest text message among the plurality of text messages.

For example, the second application may include a web browser executed for displaying information associated with a uniform resource location (URL) indicated by a text message included in the execution screen of the first application.

For example, the second application may be configured to display a map image corresponding to a geographic name included in a text message included in the execution screen of the first application.

For example, the identifying may comprise: identifying a folding event of the multi-foldable electronic device and the flexible display based on identifying any one of the second housing or the third housing that is folded with respect to the first housing. The identifying may comprise identifying the second application to be executed in response to the folding event based on a state of the first application providing the execution screen.

For example, the displaying the execution screen of the first application may comprise displaying, in the unfolding state of the multi-foldable electronic device, the execution screen of the first application based on a size of the flexible display.

As described above, according to an example embodiment, a multi-foldable electronic device may comprise: a first housing, a second housing rotatably coupled to a side of the first housing, a third housing rotatably coupled to another side of the first housing, a flexible display including a first region corresponding to the first housing, a second region corresponding to the second housing and a third region corresponding to the third housing, a first sensor configured to provide information related to a first angle between the first housing and the second housing, a second sensor configured to provide information related to a second angle between the first housing and the third housing, at least one processor, comprising processing circuitry, and memory storing instructions. The instructions, when executed by at least one processor, individually and/or collectively, may cause the electronic device to, while executing a first application in an unfolding state of the first housing, the second housing and the third housing, display an execution screen of the first application on the first region, the second region and the third region of the flexible display. The instructions, when executed by at least one processor , individually and/or collectively, may cause the electronic device to, while displaying the execution screen of the first application on the first region, the second region and the third region of the flexible display, identify any one of the second housing and the third housing being folded with respect to the first housing based on information from the first sensor and the second sensor. The instructions, when executed by at least one processor, individually and/or collectively, may cause the electronic device to display an execution screen of the first application on the second region and an execution screen of a second application on the first region and the third region, or display an execution screen of the first application on the first region and the third region of the flexible display and an execution screen of the second application on the second region, based on identifying that the second housing is folded with respect to the first housing. The instructions, when executed by at least one processor, individually and/or collectively, may cause the electronic device to display an execution screen of the first application on the third region and an execution screen of the second application on the first region and the second region, or display an execution screen of the first application on the first region and the third region and an execution screen of the second application on the third region, based on identifying that the third housing is folded with respect to the first housing.

For example, the instructions, when executed by at least one processor, individually and/or collectively, may cause the multi-foldable electronic device to execute, based on identifying any one of the second housing or the third housing that is folded with respect to the first housing, the second application corresponding to a visual object included in the execution screen of the first application.

For example, the instructions, when executed by at least one processor, individually and/or collectively, may cause the multi-foldable electronic device to display, based on whether to switch to the unfolding state after identifying the second housing or the third housing that is folded with respect to the first housing, the execution screen of the first application on the first region, the second region and the third region.

The device described above may be implemented as a hardware component, a software component, and/or a combination of a hardware component and a software component. For example, the devices and components described in the various example embodiments may be implemented using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to various example embodiments may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include may be those configured to store program instructions, including a magnetic medium such as a hard disk, floppy disk, and magnetic tape, optical recording medium such as a CD-ROM and DVD, magneto-optical medium, such as a floptical disk, and ROM, RAM, flash memory, and the like. In addition, examples of other media may include recording media or storage media managed by app stores that distribute applications, sites that supply or distribute various software, servers, and the like.

As described above, although various example embodiments have been described with limited examples and drawings, one of ordinary skill in the art will understand that various modifications and changes are possible from the above description, without departing from full scope of the disclosure, including the appended claims and their equivalents. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims fall within the scope of the disclosure. It will also be understood that any of the embodiment(s) described herein may be used in conjunction with any other embodiment(s) described herein.

## Claims

1. A multi-foldable electronic device, comprising:
a first housing;
a second housing rotatably coupled to a side of the first housing;
a third housing rotatably coupled to another side of the first housing;
a flexible display including a first region corresponding to the first housing, a second region corresponding to the second housing and a third region corresponding to the third housing;
a first sensor configured to provide information related to a first angle between the first housing and the second housing;
a second sensor configured to provide information related to a second angle between the first housing and the third housing;
at least one processor comprising processing circuitry; and
memory, comprising one or more storage mediums, storing instructions, wherein the instructions, when executed by at least one processor, individually or collectively, cause the multi-foldable electronic device to:
while executing a first application in an unfolding state of the first housing, the second housing and the third housing, display an execution screen of the first application on the first region, the second region and the third region of the flexible display,
while displaying the execution screen of the first application on the first region, the second region and the third region of the flexible display, identify any of the second housing and the third housing being folded with respect to the first housing based on information from the first sensor and the second sensor,
based on identifying that the second housing is folded with respect to the first housing, display an execution screen of the first application on the second region of the flexible display and an execution screen of a second application on the first region and the third region of the flexible display, and
based on identifying that the third housing is folded with respect to the first housing, display an execution screen of the first application on the first region and the second region of the flexible display and an execution screen of a second application on the third region of the flexible display.

2. The multi-foldable electronic device of claim 1, wherein the flexible display is configured to be extended from a first surface of the second housing to a third surface of the third housing across a second surface of the first housing.

3. The multi-foldable electronic device of claim 1, wherein the instructions, when executed by at least one processor individually or collectively, cause the multi-foldable electronic device to:
based on identifying any one of the second housing or the third housing folded with respect to the first housing, display, in a first portion among flat portions of the flexible display, the execution screen of the first application reduced based on a size of the first portion, and display the execution screen of the second application in a second portion larger than the first portion.

4. The multi-foldable electronic device of claim 1, wherein the instructions, when executed by at least one processor individually or collectively, cause the multi-foldable electronic device to:
display, in a state that both the first angle and the second angle are changed, the second screen in a first portion among portions of the flexible display distinguished by the second angle changed to be greater than the first angle, and the third screen in a second portion larger than the first portion.

5. The multi-foldable electronic device of claim 1, wherein the instructions, when executed by at least one processor individually or collectively, cause the multi-foldable electronic device to:
display, based on execution of the first application, including a messenger application, the execution screen of the first application including a plurality of text messages received by the multi-foldable electronic device;
execute, based on identifying any one of the third housing or the second housing folded with respect to the first housing, the second application associated with latest text message among the plurality of text messages.

6. The multi-foldable electronic device of claim 5, wherein the instructions, when executed by at least one processor individually or collectively, cause the multi-foldable electronic device to:
while displaying the latest message including a uniform resource location (URL), execute, based on identifying any one of the second housing or the third housing folded with respect to the first housing, the second application including a web browser based on the URL.

7. The multi-foldable electronic device of claim 5, wherein the instructions, when executed by at least one processor individually or collectively, cause the multi-foldable electronic device to:
while displaying the latest message including a geographic name, display, based on identifying any one of the second housing or the third housing folded with respect to the first housing, the third screen including a map image corresponding to the geographic name by executing the second application including a map application.

8. The multi-foldable electronic device of claim 1, wherein the instructions, when executed by at least one processor individually or collectively, cause the multi-foldable electronic device to:
identify a folding event of the multi-foldable electronic device and the flexible display based on identifying any of the second housing or the third housing being folded with respect to the first housing;
identify the second application to be executed in response to the folding event based on a state of the first application corresponding to the execution screen displayed on the first region, the second region, and the third region.

9. The multi-foldable electronic device of claim 1, wherein the instructions, when executed by at least one processor individually or collectively, cause the multi-foldable electronic device to:
display, in the unfolding state, the execution screen based on the size of the flexible display.

10. The multi-foldable electronic device of claim 1, wherein the instructions, when executed by at least one processor individually or collectively, cause the multi-foldable electronic device to:
while displaying the execution screen of the second application and the execution screen of the first application based on identifying any of the second housing or the third housing being folded with respect to the first housing, cease, based on whether to switch to the unfolding state, to display the execution screen of the second application, and display the execution screen of the first application on the first region, the second region and the third region.

11. The multi-foldable electronic device of claim 1, wherein the instructions, when executed by at least one processor individually or collectively, cause the multi-foldable electronic device to:
based on identifying any of the second housing or the third housing being folded with respect to the first housing, display the execution screen of the second application in a portion, among flat portions of the flexible display, perpendicular to a direction of acceleration of gravity.

12. A method of operating a multi-foldable electronic device, comprising:
displaying, while executing a first application in an unfolding state of a first housing, a second housing and a third housing of the multi-foldable electronic device, an execution screen of the first application on a first region, a second region and a third region;
identifying, while displaying the execution screen of the first application on the first region, the second region and the third region, based on information from a first sensor and a second sensor, any of the second housing and the third housing being folded with respect to the first housing;
displaying, based on identifying that the second housing is folded with respect to the first housing, an execution screen of the first application on the second region of the flexible display and displaying an execution screen of the second application on the first region and the third region of the flexible display; and
displaying, based on identifying that the third housing is folded with respect to the first housing, an execution screen of the first application on the first region and the second region of the flexible display, and displaying an execution screen of the second application on the third region of the flexible display.

13. The method of claim 12, wherein the displaying the execution screen of the first application comprises:
displaying, based on execution of the first application, including a messenger application, the execution screen including a plurality of text messages that has received by the multi-foldable electronic device,
wherein the second application is associated with latest text message among the plurality of text messages.

14. The method of claim 12, wherein the second application includes a web browser executed for displaying information associated with a uniform resource location (URL) indicated by a text message included in the execution screen of the first application.

15. The method of claim 12, wherein the second application is configured to display a map image corresponding to a geographic name included in a text message included in the execution screen of the first application.
